# EUROPÄISCHE PATENTSCHRIFT

(11) **EP 4 409 241 B1**
(45) Veröffentlichungstag und Bekanntmachung des Hinweises auf die Patenterteilung: **08.04.2026**
(21) Anmeldenummer: 22817520.4
(22) Anmeldetag: 30.09.2022
(51) Int. Cl.: G01G 17/04

(54) **DIFFERENZIALDOSIERWAAGE FÜR FLÜSSIGKEITEN UND VERFAHREN ZUR DOSIERUNG VON FLÜSSIGKEITEN**
DIFFERENTIAL DOSING SCALE FOR LIQUIDS AND METHOD FOR DOSING LIQUIDS
BALANCE DE DOSAGE DIFFÉRENTIELLE POUR LIQUIDES ET PROCÉDÉ DE DOSAGE DE LIQUIDES

(30) Priorität: 01.10.2021 DE 102021125502
(43) Veröffentlichungstag der Anmeldung: 07.08.2024
(73) Patentinhaber: Qlar Europe GmbH, 64293 Darmstadt (DE)
(72) Erfinder: SCHWEIZER, Peter, 64293 Darmstadt (DE)
(86) Internationale Anmeldenummer: PCT/EP2022/077246
(87) Internationale Veröffentlichungsnummer: WO 2023/052572

(56) Entgegenhaltungen:
- WO-A1-2015/158764

## Beschreibung

Die vorliegende Erfindung betrifft eine Differenzialdosierwaage zur Dosierung von Flüssigkeit, mit einem Tauchbehälter, in dem die zu dosierende Flüssigkeit enthalten und/oder aufnehmbar ist und/oder aus dem die zu dosierende Flüssigkeit zur dosierten Entnahme der Flüssigkeit abführbar ist, einem Tauchrohr, das zur dosierten Entnahme der zu dosierenden Flüssigkeit aus dem Tauchbehälter in den Tauchbehälter eintaucht, und einer Dosierpumpe, mit der die zu dosierende Flüssigkeit über das Tauchrohr aus dem Tauchbehälter ansaugbar und aus der Differenzialdosierwaage abführbar ist. Außerdem betrifft die vorliegende Erfindung ein Verfahren zur Dosierung von Flüssigkeit.

Aus dem Stand der Technik sind bereits solche Differenzialdosierwaagen zur Flüssigkeitsdosierung bekannt. Zum Beispiel offenbart die WO 2015/158764 A1 eine Differenzialdosierwaage zur Flüssigkeitsdosierung mit einem trichterförmigen Behälter für die zu dosierende Flüssigkeit, mit einer Dosierpumpe, mit einer an die Dosierpumpe angeschlossenen Leitung zur Entnahme der Flüssigkeit aus dem Behälter, mit einer mit dem Behälter verbundenen Wägezelle zum Bestimmen des Gewichts des Behälters und mit einer Regeleinrichtung, wobei das behälterseitige Ende der Leitung von oben in den Behälter geführt und im Abstand zum Behälter angeordnet ist.

Jedoch haben bekannte Differenzialdosierwaagen, die auf dem Prinzip der tauchrohrbasierten Flüssigkeitsentnahme aus einem verwogenen Behälter basieren, den Nachteil, dass das in den verwogenen Behälter eintauchende Tauchrohr eine Auftriebskraft besitzt, welche das Wägeergebnis verfälscht. Dieser auftriebskraftbedingte Fehler ist abhängig von der Dichte der Flüssigkeit sowie dem durch das Tauchrohr verdrängten Volumen. Da sich mit der Eintauchtiefe des Tauchrohrs das durch das Tauchrohr verdrängte Volumen ändert und die Eintauchtiefe des Tauchrohrs wiederum abhängig von dem sich durch die Flüssigkeitsentnahme ändernden Füllstand des verwogenen Behälters ist, verhält sich der auftriebskraftbedingte Fehler beispielsweise bei einem konstanten, etwa zylinderförmigen Behälterquerschnitt proportional zum Füllstand, bei einem sich stetig ändernden, etwa konischen Behälterquerschnitt zeitlich veränderlich und bei einem sich unstetig ändernden, etwa mit Einbauten wie Sonden oder Heizstäben versehenen Behälterquerschnitt sprunghaft. Insbesondere bei solchen Differenzialdosierwaagen mit geregelter Gewichtsabnahme sind die beschriebenen Effekte unerwünscht und müssen rechnerisch korrigiert werden, wozu Kenntnis über den genauen, zeitlich sich ändernden Füllstand sowie über den füllstandsabhängigen Behälterquerschnitt erforderlich ist. Ein weiterer Nachteil solcher bekannter Differenzialdosierwaagen besteht darin, dass das Tauchrohr ausreichend tief in dem Tauchbehälter positioniert sein muss, damit auch bei sinkendem Füllstand gewährleistet ist, dass Flüssigkeit weiter angesaugt werden kann. Mit zunehmender Eintauchtiefe steigt jedoch auch die Ansaughöhe der Dosierpumpe, so dass die Auswahl an Dosierpumpen, förderbaren Flüssigkeiten oder die maximale Behälterhöhe beschränkt ist. Zudem ändern sich die Druckverhältnisse auf der Saugseite der Dosierpumpe mit sich änderndem Füllstand, was wiederum zu einer Verschiebung des Arbeitspunktes auf der Pumpenkennlinie und somit zu einer Verschlechterung der Regelbarkeit der Regelstrecke führt.

Es ist also die Aufgabe der vorliegenden Erfindung, die Nachteile aus dem Stand der Technik zu vermeiden oder wenigstens zu verringern. Insbesondere soll eine Differenzialdosierwaage bereitgestellt werden, die eine gute wägetechnische Entkopplung aufweist, und deren Wägeergebnis präzise und einfach ermittelt werden kann.

Die Aufgabe wird durch eine Differenzialdosierwaage mit den Merkmalen des Patentanspruchs 1 gelöst. Vorteilhafte Ausführungsformen sind in den Unteransprüchen beansprucht und werden nachfolgendend näher erläutert.

Somit wird die Aufgabe der Erfindung bei einer gattungsgemäßen Differenzialdosierwaage erfindungsgemäß dadurch gelöst, dass die Differenzialdosierwaage baulich und/oder regelungstechnisch so ausgebildet ist, dass ein in dem Tauchbehälter vorliegender Flüssigkeitsspiegel der zu dosierenden Flüssigkeit auf einem konstanten vorbestimmten und/oder vorbestimmbaren Niveau relativ zu dem Tauchrohr gehalten wird.

Der Erfindung liegt die überraschende Erkenntnis zugrunde, dass das Wägeergebnis verbessert werden kann, indem die Eintauchtiefe des Tauchrohrs in die zu dosierende Flüssigkeit des Tauchbehälters praktisch konstant gehalten wird. Dies wird erfindungsgemäß dadurch erreicht, dass der Flüssigkeitsspiegel in dem Tauchbehälter relativ zu dem Tauchrohr konstant gehalten wird. Dadurch kann die Eintauchtiefe des Tauchrohrs in besonders einfacher und dennoch zuverlässiger Weise eingestellt und zumindest zweitweise gehalten werden.

Der Tauchbehälter (und optional ein weiter unten näher beschriebener Vorratsbehälter) und die darin enthaltene Flüssigkeit bilden vorzugsweise ein geschlossenes, beispielsweise fest miteinander verbundenes System (verwogenes System), dessen Gewicht erfasst wird, um die Flüssigkeitsabnahme aus dem Tauchbehälter aus dem abnehmenden Gewicht des verwogenen Systems ermitteln zu können. Das Tauchrohr taucht vorzugsweise in den Tauchbehälter/unter den Flüssigkeitsspiegel ein, so dass über das Tauchrohr die zu entnehmende Flüssigkeit mittels der mit dem Tauchrohr verbundenen Dosierpumpe angesaugt und einem nachfolgenden Prozess dosiert zugeführt werden kann. Dabei ist das Tauchrohr vorzugsweise beabstandet zu der Behälterwand des Tauchbehälters angeordnet und taucht vorzugsweise von oben in den Tauchbehälter ein, so dass sich das Tauchrohr nicht an dem Tauchbehälter abstützt und kein Kraft(neben)schluss zwischen dem Tauchrohr und dem Tauchbehälter bzw. dem verwogenen System vorliegt. Das heißt, dass vorzugsweise das Tauchrohr und die Dosierpumpe nicht Teil des verwogenen Systems sind und ihr Gewicht nicht erfasst wird. Erfindungsgemäß kann die Differenzialdosierwaage bauliche und/oder regelungstechnische Maßnahmen aufweisen, die ausgebildet sind, um die Oberfläche einer in dem Tauchbehälter vorliegenden Flüssigkeitsmenge in dem Tauchbehälter unabhängig von der Flüssigkeitsentnahme/der Förderleistung der Dosierpumpe auf dem konstanten Niveau relativ zu dem Tauchrohr zu halten. Das heißt, dass die Differenzialdosierwaage vorzugsweise so ausgebildet ist, dass sich die Position des Flüssigkeitsspiegels relativ zu dem Tauchrohr nicht ändert, auch wenn über das Tauchrohr Flüssigkeit aus dem Tauchbehälter abgeführt/angesaugt wird, bzw. dass eine Änderung des Flüssigkeitsfüllstands durch die baulichen und/oder regelungstechnischen Maßnahmen ausgeglichen wird.

Dies hat den Vorteil, dass durch das Konstant-Halten des Niveaus relativ zu dem Tauchrohr, die mit einer sich verändernden Eintauchtiefe einhergehenden Nachteile vermieden werden können. Auch wenn die Auftriebskraft selbst unabhängig von der Behältergeometrie ist, da sie ausschließlich von der Menge des verdrängten Volumens abhängt, spielt die Behältergeometrie bei Veränderung der Eintauchtiefe über der Zeit eine Rolle, da sich bei konstanter Entnahmemenge der Flüssigkeitsspiegel zeitabhängig ändert. Jede zeitabhängige Kraftänderung (hier die Auftriebskraft) geht bei der Differentialdosierwaage in die ermittelte Förderleistung ein. Dementsprechend ist es bei der vorliegenden Erfindung nicht mehr erforderlich die Behältergeometrie zu kennen, um daraus die Änderung der Auftriebskraft berechnen zu können, da die Auftriebskraft durch die konstante Eintauchtiefe des Tauchrohrs unverändert oder praktisch unverändert bleibt. Durch die konstante Eintauchtiefe bleibt nicht nur die Auftriebskraft des Tauchrohrs während des Betriebs der Differenzialdosierwaage konstant, sondern vorteilhafterweise kann auch der Arbeitspunkt der Dosierpumpe währenddessen konstant bleiben, so dass das System eine gute Regelbarkeit aufweist. Zudem kann durch die konstante Eintauchtiefe eine geringere Eintauchtiefe für das Tauchrohr gewählt werden, was wiederum die Auftriebskraft des Tauchbehälters und den dadurch entstehenden Fehler entweder auf ein ggf. akzeptables Maß verringert oder den Aufwand für dessen rechnerische Kompensation minimiert. Die Justage des wägetechnischen Systems kann nach bekannter Methode mittels Prüfgewichten bei eingefüllter Flüssigkeit erfolgen.

Außerdem kann vor allem auch eine während des Dosierens variierende auf das Tauchrohr wirkende Auftriebskraft zuverlässig vermieden oder zumindest deutlich reduziert werden.

Beim Betrieb der Differenzialdosierwaage ist vorzugsweise das Tauchrohr zumindest teilweise in die im Tauchbehälter enthaltene Flüssigkeit eingetaucht.

Das Niveau des Flüssigkeitsspiegels ist dabei vorzugsweise entlang des Weltkoordinatensystems und/oder entlang einer Achse parallel oder antiparallel zur Schwerkraftrichtung angegeben.

Der Flüssigkeitsspiegel wird dabei vorzugsweise während des Betriebs der Differenzialdosierwaage und/oder während des Dosierens der Flüssigkeit auf dem konstanten Niveau gehalten.

Dass das Niveau des Flüssigkeitsspiegels relativ zu dem Tauchrohr konstant gehalten wird, bedeutet im Sinne der vorliegenden Anmeldung vorzugsweise, dass der senkrechte Abstand zwischen dem Tauchrohr (oder einem Referenzpunkt des Tauchrohrs) und dem Flüssigkeitsspiegel konstant gehalten wird.

**In** einer Ausführungsform ist das Tauchrohr ortsfest. Vorzugsweise ist das Tauchrohr entlang einer Achse parallel zur Schwerkraftrichtung angeordnet.

Gemäß einer bevorzugten Ausführungsform kann der in dem Tauchbehälter vorliegender Flüssigkeitsspiegel der zu dosierenden Flüssigkeit auf einem konstanten vorbestimmten und/oder vorbestimmbaren Niveau relativ zu einer Ansaugöffnung des Tauchrohrs gehalten werden. Die Öffnung kann beispielsweise innerhalb einer Ebene parallel oder senkrecht zu dem Flüssigkeitsspiegel liegen.

Dass das Niveau des Flüssigkeitsspiegels relativ zu dem Tauchrohr konstant gehalten wird, bedeutet im Sinne der vorliegenden Anmeldung insoweit vorzugsweise, dass der senkrechte Abstand zwischen der Ebene, innerhalb der die Ansaugöffnung liegt, und der Ebene des Flüssigkeitsspiegels konstant gehalten wird.

Gemäß einer bevorzugten Ausführungsform kann der Tauchbehälter entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar sein. Indem der Tauchbehälter verfahrbar ist, kann bei Entnahme von Flüssigkeit ein innerhalb des Tauchbehälters sinkender Flüssigkeitsspiegel relativ zu dem Tauchrohr weiterhin in Position gehalten werden, indem der Tauchbehälter verfahren wird.

Der Tauchbehälter kann dabei entlang des Bewegungspfades vorzugsweise hin- und her-verschiebbar sein.

Gemäß einer bevorzugten Ausführungsform kann das Tauchrohr entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar sein. Indem das Tauchrohr verfahrbar ist, kann bei Entnahme von Flüssigkeit ein innerhalb des Tauchbehälters sinkender Flüssigkeitsspiegel relativ zu dem Tauchrohr weiterhin in Position gehalten werden, indem das Tauchrohr verfahren wird.

Das Tauchrohr kann dabei entlang des Bewegungspfades vorzugsweise hin- und her-verschiebbar sein.

Gemäß einer bevorzugten Ausführungsform kann die Dosierpumpe entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar sein, und vorzugsweise die Differenzialdosierwaage dazu ausgebildet sein, dass die Dosierpumpe gleichsinnig und/oder gleichzeitig mit dem Tauchrohr verfahren wird und/oder auf einem konstanten vorbestimmten und/oder vorbestimmbaren Niveau relativ zu dem Tauchrohr und/oder dem Flüssigkeitsspiegel gehalten wird. Dadurch kann der relative Abstand zwischen der Dosierpumpe und der Ansaughöhe (etwa an der während des Dosierens der Flüssigkeit zugewandten und/oder innerhalb der Flüssigkeit angeordneten Ansaugöffnung des Tauchrohrs) konstant gehalten und die Dosierpumpe in einem definierten oder definierbaren Arbeitspunkt betrieben werden.

Dies ist daher vorteilhaft, da die Kennlinie einer Dosierpumpe typischerweise abhängig von dem Höhenunterschied zwischen der Position der Pumpe selbst und der Ansaugposition ist.

Ein "gleichsinniges" Verfahren von Dosierpumpe und Tauchrohr bedeutet dabei, dass während die Dosierpumpe in eine Richtung verfahren wird, ein Verfahren des Tauchrohrs in dieselbe Richtung erfolgt (und umgekehrt). Wechselt optional die Richtung des Verfahrens der Dosierpumpe, dann wechselt auch die Richtung des Verfahrens des Tauchrohrs.

Gemäß einer bevorzugten Ausführungsform kann die Differenzialdosierwaage eine Detektionseinrichtung zum Detektieren einer Position des Flüssigkeitsspiegels und/oder zum Detektieren einer Füllstandshöhe der Flüssigkeit in dem Tauchbehälter aufweisen, die Detektionseinrichtung insbesondere aufweisend einen optischen Sensor, einen Ultraschallsensor und/oder einen Mikrowellensensor. Auf diese Weise kann die Position des Flüssigkeitsspiegels (insbesondere entlang einer Richtung parallel oder antiparallel zur Schwerkraftrichtung) besonders vorteilhaft und präzise bestimmt werden. Vorzugsweise wird die Position des Flüssigkeitsspiegels dabei im Weltkoordinatensystem (z-Richtung) und/oder relativ zu einer Referenz, wie die Ansaugöffnung des Tauchrohres, bestimmt.

Anhand der Position des Flüssigkeitsspiegels kann bei Kenntnis der Position und der Gestaltung des Tauchbehälters die Füllstandshöhe der Flüssigkeit in dem Tauchbehälter ermittelbar sein. Andere Möglichkeiten zur Bestimmung der Füllstandshöhe der Flüssigkeit in dem Tauchbehälter sind dem Fachmann ebenfalls bekannt.

Vorzugsweise arbeitet die Detektionseinrichtung berührungslos, also insbesondere ohne Kontakt zu der Flüssigkeit und/oder dem Tauchbehälter.

Gemäß einer bevorzugten Ausführungsform kann die Differenzialdosierwaage dazu ausgebildet sein, in Abhängigkeit einer Position des Flüssigkeitsspiegels und/oder einer Füllstandshöhe der Flüssigkeit in dem Tauchbehälter den Tauchbehälter, das Tauchrohr und/oder die Dosierpumpe zu verfahren, wobei vorzugsweise die Position und/oder Füllstandshöhe mittels der Detektionseinrichtung ermittelt wird. Auf diese Weise kann besonders vorteilhaft eine Regelung der Eintauchtiefe des Tauchrohres in die zu dosierende Flüssigkeit realisiert sein.

Damit ändert sich trotz Entnahme von Flüssigkeit nicht oder nur in geringem Maße die auf das Tauchrohr wirkende Auftriebskraft. Gleiches gilt mit umgekehrten Vorzeichen entsprechend bei Zuführen von Flüssigkeit (etwa beim Auffüllen des Tauchbehälters).

Vorzugsweise erfolgt das Verfahren von Tauchbehälter, Tauchrohr und/oder Dosierpumpe dabei jeweils entlang des jeweiligen Bewegungspfades.

Das konstante Niveau wird dabei vorteilhafterweise zumindest zeitweise während des Betriebs der Waage und/oder während des Dosierens der Flüssigkeit gehalten.

**In** einer Ausführungsform wird der Tauchbehälter entsprechend verfahren.

**In** einer Ausführungsform wird das Tauchrohr entsprechend verfahren.

**In** einer Ausführungsform wird der Tauchbehälter und das Tauchrohr entsprechend verfahren.

**In** einer Ausführungsform wird das Tauchrohr und die Dosierpumpe entsprechend verfahren.

**In** einer Ausführungsform wird der Tauchbehälter, das Tauchrohr und die Dosierpumpe entsprechend verfahren.

Sofern (auch) der Tauchbehälter verfahren wird, ist eine oder mehrere der folgenden Optionen besonders vorteilhaft:
Bei einer netto-Flüssigkeitsentnahme aus dem Tauchbehälter (wenn also mehr Flüssigkeit aus dem Tauchbehälter abfließt, als in ihn gelangt) wird der Tauchbehälter vorzugsweise parallel zu dem Normalenvektor des Flüssigkeitsspiegels und/oder antiparallel zur Schwerkraftrichtung verfahren, insbesondere bei einem ortsfestem Tauchrohr.

Bei einem netto-Flüssigkeitszufluss in den Tauchbehälter (wenn also mehr Flüssigkeit in den Tauchbehälter gelangt als aus ihm abfließt) wird der Tauchbehälter vorzugsweise antiparallel zu dem Normalenvektor des Flüssigkeitsspiegels und/oder parallel zur Schwerkraftrichtung verfahren, insbesondere bei einem ortsfestem Tauchrohr.

Sofern (auch) das Tauchrohr verfahren wird, ist eine oder mehrere der folgenden Optionen besonders vorteilhaft:
Bei einer netto-Flüssigkeitsentnahme aus dem Tauchbehälter (wenn also mehr Flüssigkeit aus dem Tauchbehälter abfließt, als in ihn gelangt) wird das Tauchrohr vorzugsweise antiparallel zu dem Normalenvektor des Flüssigkeitsspiegels und/oder parallel zur Schwerkraftrichtung verfahren.

Bei einem netto-Flüssigkeitszufluss in den Tauchbehälter (wenn also mehr Flüssigkeit in den Tauchbehälter gelangt als aus ihm abfließt) wird das Tauchrohr vorzugsweise parallel zu dem Normalenvektor des Flüssigkeitsspiegels und/oder antiparallel zur Schwerkraftrichtung verfahren.

Dadurch kann jeweils ein infolge einer Änderung, insbesondere einer Abnahme oder Zunahme, der Flüssigkeitsmenge in dem Tauchbehälter sich ändernder, insbesondere sinkender oder steigender, Flüssigkeitsspiegel relativ zu dem Tauchrohr zuverlässig auf einem konstanten Niveau gehalten werden.

Gemäß einer bevorzugten Ausführungsform kann die Differenzialdosierwaage dazu ausgebildet sein, dass der Tauchbehälter und/oder das Tauchrohr, insbesondere zum Halten des konstanten Niveaus des Flüssigkeitsspiegels relativ zu dem Tauchrohr, verfahren wird oder werden.

Dabei gelten die zuvor angeführten Optionen einzeln und in beliebiger Kombination entsprechend auch hier. Vor allem kann ebenfalls das konstante Niveau dabei vorteilhafterweise zumindest zeitweise während des Betriebs der Waage und/oder während des Dosierens der Flüssigkeit gehalten werden.

Gemäß einer bevorzugten Ausführungsform kann die Differenzialdosierwaage dazu ausgebildet sein, dass der Tauchbehälter und das Tauchrohr, insbesondere zum Halten des konstanten Niveaus des Flüssigkeitsspiegels relativ zu dem Tauchrohr, beide, vorzugsweise zumindest zeitweise gleichzeitig und/oder in entgegengesetzten Richtungen, verfahren werden. Dadurch kann auch bei großen Änderungen des Flüssigkeitsspiegels eine konstante Eintauchtiefe des Tauchrohres in die zu dosierende Flüssigkeit zuverlässig erreicht werden, da die sich ändernde Füllhöhe des Tauchbehälters durch gleich zwei Verfahrwege gleichzeitig kompensiert werden kann. Außerdem können dadurch die einzelnen Verfahrwege von Tauchrohr und Tauchbehälter jeweils kürzer sein und somit die Differenzialdosierwaage kompakter gebaut sein.

In einer Ausführungsform wird das gleichzeitige Verfahren von Tauchbehälter und Tauchrohr nur zumindest zweitweise während eines Zeitraums des Befüllens des Tauchbehälters durchgeführt und insbesondere beim Dosieren der Flüssigkeit nur der Tauchbehälter oder nur das Tauchrohr verfahren.

Gemäß einer bevorzugten Ausführungsform kann zumindest der Tauchbehälter zu einem verwogenen System der Differenzialdosierwaage zählen.

Eine solche Differenzialdosierwaage, die auf dem Prinzip der tauchrohrbasierten Flüssigkeitsentnahme aus einem verwogenen Behälter, hier dem Tauchbehälter, basiert, zeichnet sich gegenüber Wägesystemen, die ein flexibles Entkopplungselement verwenden, dadurch aus, dass sie eine gute Kraftentkopplung zwischen dem verwogenen Teil der Differenzialdosierwaage (hier zumindest dem Tauchbehälter und/oder einem etwaigen Vorratsbehälter, auf den weiter unten noch im Detail eingegangen wird) und dem nicht-verwogenen Teil der Differenzialdosierwaage (hier zumindest dem Tauchrohr und der Dosierpumpe) aufweist.

Zu dem Teil des verwogenen Systems der Differenzialdosierwaage zählt vorzugsweise auch die Flüssigkeit in dem Tauchbehälter.

Gemäß einer bevorzugten Ausführungsform kann die Differenzialdosierwaage dazu ausgebildet sein, die Geschwindigkeit und/oder die Richtung des Verfahrens des Tauchbehälters, des Tauchrohrs und/oder der Dosierpumpe jeweils in Abhängigkeit einer Änderung der Position des Flüssigkeitsspiegels und/oder der Füllstandshöhe der Flüssigkeit in dem Tauchbehälter und/oder in Abhängigkeit einer Änderung der Ergebnisse von Wägungen des verwogenen Systems durchzuführen. Dadurch kann regelungstechnisch besonders zuverlässig das Niveau des Flüssigkeitsspiegels eingestellt werden. Insbesondere kann ein Zufluss von Flüssigkeit, etwa aus dem Vorratsbehälter, mit einbezogen werden und auch währenddessen das konstante Niveau relativ zu dem Tauchrohr gehalten werden.

Beispielsweise kann die Änderung der Position eine Änderungsrate des Niveaus sein. Diese kann beispielsweise anhand der Detektionsergebnissen ermittelt werden. So kann auch auf unterschiedliche Geschwindigkeiten, mit denen sich der Flüssigkeitsspiegel bewegt (insbesondere während des Dosierens und/oder während des Auffüllens des Tauchbehälters), reagiert werden.

**In** einer Ausführungsform wird die Geschwindigkeit und/oder die Richtung des Verfahrens des Tauchbehälters entsprechend durchgeführt.

**In** einer Ausführungsform wird die Geschwindigkeit und/oder die Richtung des Verfahrens des Tauchrohrs entsprechend durchgeführt.

**In** einer Ausführungsform wird die Geschwindigkeit und/oder die Richtung des Verfahrens jeweils des Tauchbehälters und des Tauchrohrs entsprechend durchgeführt.

**In** einer Ausführungsform wird die Geschwindigkeit und/oder die Richtung des Verfahrens jeweils des Tauchrohrs und der Dosierpumpe entsprechend durchgeführt.

**In** einer Ausführungsform wird die Geschwindigkeit und/oder die Richtung des Verfahrens jeweils des Tauchbehälters, des Tauchrohrs und der Dosierpumpe entsprechend durchgeführt.

Dadurch kann ein infolge einer Änderung, insbesondere einer Abnahme oder Zunahme, der Flüssigkeitsmenge in dem Tauchbehälter sich ändernder, insbesondere sinkender oder steigender, Flüssigkeitsspiegel relativ zu dem Tauchrohr auf einem konstanten Niveau gehalten werden.

Gemäß einer bevorzugten Ausführungsform kann die Differenzialdosierwaage einen Vorratsbehälter aufweisen, in dem die zu dosierende Flüssigkeit enthalten und/oder aufnehmbar ist, wobei der Tauchbehälter mit dem Vorratsbehälter zur Zuführung der zu dosierenden Flüssigkeit aus dem Vorratsbehälter in den Tauchbehälter fluidisch verbunden ist. Dadurch ist beispielsweise bei Unterschreiten einer kritischen Füllstandshöhe der Flüssigkeit in dem Tauchbehälter dem Tauchbehälter Flüssigkeit zuführbar. Vorzugsweise wird die Flüssigkeit dem Tauchbehälter dann entsprechend zugeführt, wozu die Differenzialdosierwaage entsprechend ausgebildet sein kann.

Beispielsweise kann das Auffüllen des Tauchbehälters nach bestimmten Zeitabständen zumindest zeitweise durchgeführt werden. Während des Auffüllens kann dann beispielsweise der Verfahrweg von Tauchbehälter und/oder Dosierpumpe umgekehrt wie beim Dosieren sein und/oder das weiter unten noch beschriebene anpassbare Volumen kann während des Auffüllens vergrößert werden.

Insbesondere ist die Differenzialdosierwaage eine Differenzialdosierwaage mit einem entsprechenden Vorratsbehälter.

Gemäß einer bevorzugten Ausführungsform kann der Vorratsbehälter zu dem verwogenen System der Differenzialdosierwaage zählen. Damit ändert sich vorteilhafterweise das Wägeergebnis nicht bei einer Umverteilung von Flüssigkeit aus dem Vorratsbehälter in den Tauchbehälter.

Gemäß einer bevorzugten Ausführungsform kann die Differenzialdosierwaage baulich und/oder regelungstechnisch so ausgebildet sein, dass ein in dem Tauchbehälter vorliegender Flüssigkeitsspiegel der zu dosierenden Flüssigkeit, insbesondere während des Betriebs der Differenzialdosierwaage und/oder während des Dosierens der Flüssigkeit, auf einem konstanten vorbestimmten und/oder vorbestimmbaren Füllstand gehalten wird.
Zum Ausgleich der aus dem Tauchbehälter entnommenen zu dosierenden Flüssigkeit kann der Tauchbehälter über eine Verbindungsleitung mit dem Vorratsbehälter verbunden sein und aus diesem gespeist werden.

Erfindungsgemäß kann die Differenzialdosierwaage insoweit bauliche und/oder regelungstechnische Maßnahmen aufweisen, die ausgebildet sind, um eine in dem Tauchbehälter vorliegende Flüssigkeitsmenge und somit den Füllstand der Flüssigkeit in dem Tauchbehälter unabhängig von der Flüssigkeitsentnahme/der Förderleistung der Dosierpumpe auf dem konstanten Niveau/vorbestimmten Füllstand zu halten. Das heißt, dass die Differenzialdosierwaage vorzugsweise so ausgebildet ist, dass sich ihr Flüssigkeitsfüllstand in dem Tauchbehälter nicht ändert, auch wenn über das Tauchrohr Flüssigkeit aus dem Tauchbehälter abgeführt/angesaugt wird, bzw. dass eine Änderung des Flüssigkeitsfüllstands durch die baulichen und/oder regelungstechnischen Maßnahmen ausgeglichen wird.

Dies hat den Vorteil, dass durch das Konstant-Halten des Tauchbehälterfüllstands die mit einem sich verändernden Füllstand einhergehenden Nachteile vermieden werden können. Insbesondere ist es nicht mehr erforderlich die Behältergeometrie zu kennen, um daraus die Änderung der Auftriebskraft berechnen zu können, da die Auftriebskraft durch die konstante Eintauchtiefe des Tauchrohrs unverändert bleibt. Durch den konstanten Füllstand bleibt nicht nur die Auftriebskraft des Tauchrohrs während des Betriebs konstant, sondern vorteilhafterweise kann auch der Arbeitspunkt der Dosierpumpe konstant bleiben, so dass das System eine gute Regelbarkeit aufweist. Zudem kann durch den konstanten Füllstand eine geringere Eintauchtiefe für das Tauchrohr gewählt werden, was wiederum die Auftriebskraft des Tauchbehälters und den dadurch entstehenden Fehler entweder auf ein ggf. akzeptables Maß verringert oder den Aufwand für dessen rechnerische Kompensation minimiert. Die Justage des wägetechnischen Systems kann nach bekannter Methode mittels Prüfgewichten bei eingefüllter Flüssigkeit erfolgen.

Gemäß einer bevorzugten Ausführungsform kann die Differenzialdosierwaage ein in einer fluidischen Verbindung zwischen dem Vorratsbehälter und dem Tauchbehälter angeordnetes Schwimmerventil und einen in dem Tauchbehälter angeordneten Schwimmkörper aufweisen. Da solche Schwimmerventile und Schwimmkörper bereits aus anderen Anwendungen abseits der Differenzialdosierwaagen eingesetzt werden, ist es ohne großen Aufwand möglich, eine solche konstruktive Änderung an der Differenzialdosierwaage vorzunehmen. Dadurch, dass der Vorratsbehälter und der Tauchbehälter bereits über eine Verbindungsleitung/Fluidleitung verbunden sind, um Flüssigkeit in den Tauchbehälter zuführen/nachführen zu können, ist eine Integration einfach möglich.

Dabei kann das Schwimmerventil so durch den Schwimmkörper gesteuert sein, dass es die fluidische Verbindung bei Unterschreiten des vorbestimmten Füllstands öffnet und die fluidische Verbindung mit/bei Erreichen des vorbestimmten Füllstands trennt/schließt. Das heißt, dass die Zuführmenge über das Schwimmerventil und den Schwimmkörper in den Tauchbehälter so gesteuert wird, dass der vorbestimmte Füllstand in dem Tauchbehälter gewährleistet ist. Somit wird der Füllstand im Tauchbehälter durch ein technisch einfach aufgebautes Mittel konstant gehalten, wobei für das mechanisch arbeitende Schwimmerventil keine zusätzliche Stellenergie oder Regelung/Steuerung erforderlich ist. Mit anderen Worten begrenzt das Schwimmerventil den Minimalfüllstand auf den vorbestimmten Füllstand.

Gemäß einer Weiterbildung der bevorzugten Ausführungsform kann der Tauchbehälter in Schwerkraftrichtung unterhalb des Vorratsbehälters angeordnet sein, so dass die zu dosierende Flüssigkeit aus dem Vorratsbehälter in den Tauchbehälter schwerkraftbedingt zuführbar ist. Das heißt, dass keine separate Pumpe erforderlich ist, um die Flüssigkeit aus dem (erheblich größeren) Vorratsbehälter in den Tauchbehälter zu führen, sondern es ausreichend ist, die fluidische Verbindung zwischen dem Vorratsbehälter und dem Tauchbehälter zu öffnen.

Gemäß einer Weiterbildung der bevorzugten Ausführungsform kann die über das Schwimmerventil in den Tauchbehälter bestimmte fluidische Verbindung eine schwerkraftbedingte Förderleistung aufweisen, die höher als eine Förderleistung der Dosierpumpe ist. Das heißt, dass durch das Öffnen des Schwimmerventils zumindest so viel Flüssigkeit pro Zeit zuführbar ist, wie über die Dosierpumpe aus dem Tauchbehälter entnommen wird. Dadurch wird sichergestellt, dass die Zuflussmenge der Abflussmenge entspricht und es nicht zu einem verzögerten Ausgleich des Füllstands kommt.

Gemäß einer bevorzugten Ausführungsform kann das von dem Tauchbehälter aufnehmbare Volumen anpassbar sein, insbesondere indem ein Bodenbereich und/oder ein Wandbereich des Tauchbehälters zumindest bereichsweise beweglich und/oder in seiner Form veränderbar ausgebildet ist. Indem die Menge an von dem Tauchbehälter potenziell haltbarer Flüssigkeit durch Ändern des Haltevolumens des Tauchbehälters verändert wird, kann ein innerhalb des Tauchbehälters sinkender oder steigender Flüssigkeitsspiegel relativ zu dem Tauchrohr weiterhin in Position gehalten werden. Damit ändert sich trotz netto-Entnahme oder netto-Zufluss von Flüssigkeit nicht oder nur in geringem Maße die auf das Tauchrohr wirkende Auftriebskraft.

Ein beweglicher Boden- und/oder Wandbereich lässt sich beispielsweise durch einen um eine Drehachse drehbaren und/oder um eine Achse klappbaren Boden- und/oder Wandbereich realisieren. Ein beweglicher Boden- und/oder Wandbereich lässt sich beispielsweise auch durch einen verschiebbaren Boden- und/oder Wandbereich realisieren, etwa indem der Boden in der Höhe verstellbar und/oder eine Seitenwand nach innen und/oder außen verfahrbar ist.

Ein in seiner Form veränderbarer Boden- und/oder Wandbereich kann beispielsweise für die Dauer einer von außerhalb auf den Tauchbehälter einwirkenden Kraft das Volumen in Abhängigkeit der Stärke und/oder der Richtung der einwirkenden Kraft unterschiedlich stark reduzieren.

Ein in seiner Form veränderbarer Boden- und/oder Wandbereich lässt sich beispielsweise durch einen Boden- und/oder Wandbereich realisieren, der zumindest bereichsweise ein reversibel verformbares Material aufweist, etwa ein membranartiger Flächenbereich. Hier können beispielsweise eine Gummimembran, oder eine Gasblase, ähnlich einem Membranausgleichsgefäß in der Heizungstechnik zum Einsatz kommen. Durch Veränderung des Vordruckes auf der Gasseite der Membran kann der Füllstand eingestellt werden, um unterschiedliche Flüssigkeitsdichten auszugleichen. Durch Einwirkung mit einer Kraft auf diesen Flächenbereich von außerhalb des Tauchbehälters kann der Flächenbereich nach innen gedrückt und so das Haltevolumen verringert werden und/oder durch Verringern des Drucks das Haltevolumen vergrößert werden.

Gemäß einer bevorzugten Ausführungsform kann die Differenzialdosierwaage dazu ausgebildet sein, in Abhängigkeit einer Position des Flüssigkeitsspiegels und/oder einer Füllstandshöhe der Flüssigkeit in dem Tauchbehälter das von dem Tauchbehälter aufnehmbare Volumen anzupassen.

Dabei wird bei einer netto-Flüssigkeitsentnahme aus dem Tauchbehälter das Volumen vorzugsweise verkleinert.

Dabei wird bei einem netto-Flüssigkeitszufluss in den Tauchbehälter das Volumen vorzugsweise vergrößert.

Dadurch kann ein infolge einer Änderung, insbesondere einer Abnahme oder Zunahme, der Flüssigkeitsmenge in dem Tauchbehälter sich ändernder, insbesondere sinkender oder steigender, Flüssigkeitsspiegel relativ zu dem Tauchrohr zuverlässig auf einem konstanten Niveau gehalten werden.

Gemäß einer bevorzugten Ausführungsform kann die Differenzialdosierwaage einen mit dem Tauchbehälter fluidisch verbundenen Überlauf aufweisen. Der Überlauf kann so ausgebildet sein, dass die zu dosierende Flüssigkeit bei Überschreiten des vorbestimmten Füllstands über den Überlauf aus dem Tauchbehälter abläuft. Das allgemeine Vorsehen eines Überlaufs ist eine bekannte Ausbildung, die das unkontrollierte Überlaufen des Tauchbehälters verhindert. In der bevorzugten Ausführungsform ist der Überlauf dabei derart ausgebildet, dass durch den Überlauf dafür gesorgt wird, dass der Füllstand nicht über den vorbestimmten Füllstand hinausgeht. Somit kann, wenn dem Tauchbehälter permanent mehr Flüssigkeit zugeführt wird als aus ihm abgeführt wird, der Füllstand zu jedem Zeitpunkt auf dem vorbestimmten Füllstand gehalten werden. Mit anderen Worten begrenzt der Überlauf den Maximalfüllstand auf den vorbestimmten Füllstand. Zudem ist die Differenzialdosierwaage so ausgebildet, dass zu jedem Zeitpunkt zumindest so viel Flüssigkeit in den Tauchbehälter zugeführt wird, wie über den Überlauf abläuft.

Gemäß einer Weiterbildung der bevorzugten Ausführungsform kann die Differenzialdosierwaage einen Überlaufbehälter aufweisen, mit dem der Überlauf zum Auffangen der über den vorbestimmten Füllstand ablaufenden Flüssigkeit fluidisch verbunden ist. Dies hat den Vorteil, dass die übergelaufene Flüssigkeit aufgefangen wird und dem Tauchbehälter erneut zugeführt werden kann.

Insbesondere kann der Tauchbehälter in Schwerkraftrichtung oberhalb des Überlaufbehälters angeordnet sein. Dies hat den Vorteil, dass die Flüssigkeit ohne Verwendung einer Pumpe oder dergleichen schwerkraftbedingt aus dem Tauchbehälter in den Überlaufbehälter strömt.

Gemäß einer Weiterbildung der bevorzugten Ausführungsform kann die Differenzialdosierwaage eine Überlaufpumpe aufweisen, mit der die zu dosierende Flüssigkeit aus dem Überlaufbehälter ansaugbar und dem Tauchbehälter zuführbar ist. Somit kann die übergelaufene Flüssigkeit dem Tauchbehälter erneut zugeführt werden. Alternativ kann die Flüssigkeit aus dem Überlaufbehälter angesaugt und dem Vorratsbehälter wieder zugeführt werden, von dem aus sie wiederum in den Tauchbehälter geführt wird. Entscheidend ist, dass der Überlaufbehälter Teil des verwogenen Systems ist und die Flüssigkeit dem Tauchbehälter (direkt oder über den Vorratsbehälter) zuführbar ist. Somit dient die Überlaufpumpe dazu, um die Flüssigkeit von dem Überlaufbehälter entgegen der Schwerkraft auf ein höheres Niveau zu fördern, um dem Tauchbehälter die Flüssigkeit zuzuführen.

Dabei kann die Überlaufpumpe vorzugsweise eine höhere Förderleistung als die Dosierpumpe aufweisen bzw. mit einer höheren Förderleistung betrieben werden. Das heißt, dass dem Tauchbehälter permanent eine größere Flüssigkeitsmenge zugeführt wird, als aus ihm abgeführt wird, wobei das Delta zwischen den Zu- bzw. Abflussmengen über den Überlauf abgegeben wird.

Gemäß einer Weiterbildung der bevorzugten Ausführungsform kann der Überlaufbehälter durch den Vorratsbehälter gebildet sein. Das heißt, dass der Vorratsbehälter in Schwerkraftrichtung unterhalb des Tauchbehälters angeordnet ist und die Zuführung der Flüssigkeit in den Tauchbehälter über die Überlaufpumpe erfolgt. Somit sind nur zwei Behälter erforderlich, wenn der Vorratsbehälter gleichzeitig als Überlaufbehälter dient. Aus Bauraumgründen kann es jedoch erforderlich sein, einen separaten Überlaufbehälter vorzusehen, so dass der Vorratsbehälter über dem Tauchbehälter und dem Überlaufbehälter angeordnet wird und zur Zuführung in den Tauchbehälter dient und dass der Überlaufbehälter unter dem Tauchbehälter angeordnet ist, zum Auffangen der übergelaufenen Flüssigkeit dient und die aufgefangene Flüssigkeit entweder dem Tauchbehälter direkt oder dem Vorratsbehälter wieder zugeführt wird.

Gemäß einer bevorzugten Ausführungsform kann die Differenzialdosierwaage ein in einer fluidischen Verbindung zwischen dem Vorratsbehälter und dem Tauchbehälter angeordnetes Steuerventil aufweisen, das so gesteuert und/oder geregelt ist, dass es eine Flüssigkeitsmenge aus dem Vorratsbehälter in den Tauchbehälter zuführt, die einer über das Tauchrohr aus der Differenzialdosierwaage abgeführten Flüssigkeitsmenge entspricht. Das heißt, dass der Füllstand auch durch regelungstechnische Maßnahmen konstant gehalten werden kann, indem zu jedem Zeitpunkt eine exakt so große Flüssigkeitsmenge in den Tauchbehälter zugeführt wird wie aus dem Tauchbehälter abgeführt wird. Dadurch, dass das Gewicht der Flüssigkeitsabnahme bereits erfasst wird, kann die Steuerung/Regelung des Steuerventils auf einfache Weise zusätzlich implementiert werden.

Gemäß einer bevorzugten Ausführungsform kann das Tauchrohr eine Ansaugöffnung zum Ansaugen der zu dosierenden Flüssigkeit aus dem Tauchbehälter aufweisen. Dies kann insbesondere die weiter oben bereits erwähnte Ansaugöffnung sein. Das Tauchrohr kann vorzugsweise so in dem Tauchbehälter angeordnet sein, dass die Ansaugöffnung mit einer Eintauchtiefe unterhalb des vorbestimmten Füllstands in die Flüssigkeit eintaucht, die zwischen dem 1- bis 10-fachen des Tauchrohrdurchmessers liegt. Das heißt, dass die Eintauchtiefe so gering wie möglich sein sollte, um den mit zunehmender Eintauchtiefe steigenden Auftrieb und die mit zunehmender Eintauchtiefe steigende zu überwindende Ansaughöhe zu minimieren, um den dadurch entstehenden Fehler gering zu halten. Auch sollte eine Wandstärke des Tauchrohrs so gering wie möglich sein, um den mit zunehmender Wandstärke steigenden Auftrieb und den dadurch entstehenden Fehler zu minimieren.

Gemäß einer bevorzugten Ausführungsform kann die Differenzialdosierwaage eine Wägeeinrichtung aufweisen, die ausgelegt ist, um das Gewicht eines und/oder des (fest miteinander verbundenen) Systems, insbesondere aus dem Vorratsbehälter, dem Tauchbehälter und der darin enthaltenen, zu dosierenden Flüssigkeit (d.h. ohne Pumpe und Tauchrohr), zu erfassen. Aus der Gewichtsabnahme kann dann gravimetrisch die Menge der Flüssigkeit, die über die Dosierpumpe abgeführt wurde, ermittelt werden. So lässt sich die Fördermenge besonders präzise bestimmten.

Gemäß einer bevorzugten Ausführungsform kann die Differenzialdosierwaage eine Steuer- und/oder Regeleinrichtung aufweisen, die ausgelegt ist, um die Dosierpumpe in Abhängigkeit des durch die Wägeeinrichtung erfassten Gewichts des Systems und in Abhängigkeit einer Steuergröße für eine über das Tauchrohr aus der Differenzialdosierwaage abzuführende Menge der Flüssigkeit zu steuern und/oder zu regeln. Dadurch kann die Fördermenge besonders genau dosiert einem nachfolgenden Prozess zugeführt werden.

Gemäß einer bevorzugten Ausführungsform können/kann der Tauchbehälter und/oder der Vorratsbehälter eine sich nach unten (d.h. in Schwerkraftrichtung) verjüngende, beispielsweise konische Querschnittsform aufweisen, um die Restentleerbarkeit zu verbessern.

Außerdem betrifft die Erfindung ein Verfahren zur Dosierung von Flüssigkeit. Erfindungsgemäß weist das Verfahren auf, dass die zu dosierende Flüssigkeit in einem Tauchbehälter einer Differenzialdosierwaage, insbesondere nach einem der vorangehenden Ansprüchen, bereitgestellt wird, aus welchem Tauchbehälter die zu dosierende Flüssigkeit zur dosierten Entnahme der Flüssigkeit mit einer Dosierpumpe über ein zur dosierten Entnahme der zu dosierenden Flüssigkeit aus dem Tauchbehälter in den Tauchbehälter eintauchendes Tauchrohr angesaugt und aus der Differenzialdosierwaage abgeführt wird, wobei ein Flüssigkeitsspiegel der zu dosierenden Flüssigkeit in dem Tauchbehälter, insbesondere während des Betriebs der Differenzialdosierwaage und/oder während des Dosierens der Flüssigkeit, auf einem konstanten vorbestimmten und/oder vorbestimmbaren Niveau relativ zu dem Tauchrohr, insbesondere einer Ansaugöffnung des Tauchrohrs, gehalten wird.

Alle Vorteile und Optionen, die oben in Bezug auf die Differenzialdosierwaage beschrieben worden sind, gelten ganz entsprechend auch hier, einzeln und in beliebiger Kombination. Daher kann an dieser Stelle auf die vorherigen Ausführungen verweisen werden.

Insbesondere können alle Merkmale der oben beschriebenen Differenzialdosierwaage bei der im Verfahren eingesetzten Differenzialdosierwaage, einzeln und in beliebiger Kombination, vorgesehen sein. Auch können alle Merkmale, hinsichtlich derer die oben beschriebene Differenzialdosierwaage ausgebildet ist, innerhalb des Verfahrens durchgeführt werden. Vor allem sind die in den folgenden Ausführungsformen nochmals hervorgehobenen Optionen besonders vorteilhaft auch bei dem Verfahren vorsehbar.

Gemäß einer bevorzugten Ausführungsform des Verfahrens kann der Tauchbehälter und/oder das Tauchrohr, insbesondere zum Halten des konstanten Niveaus des Flüssigkeitsspiegels relativ zu dem Tauchrohr, verfahren werden.

Gemäß einer bevorzugten Ausführungsform des Verfahrens kann in Abhängigkeit einer Position des Flüssigkeitsspiegels und/oder einer Füllstandshöhe der Flüssigkeit in dem Tauchbehälter der Tauchbehälter, das Tauchrohr und/oder die Dosierpumpe verfahren wird, wobei vorzugsweise die Position und/oder Füllstandshöhe mittels einer Detektionseinrichtung ermittelt werden.

Gemäß einer bevorzugten Ausführungsform des Verfahrens kann ein in dem Tauchbehälter vorliegender Flüssigkeitsspiegel der zu dosierenden Flüssigkeit, insbesondere während des Betriebs der Differenzialdosierwaage und/oder während des Dosierens der Flüssigkeit, auf einem konstanten vorbestimmten und/oder vorbestimmbaren Füllstand gehalten werden.

Gemäß einer bevorzugten Ausführungsform des Verfahrens kann eine fluidische Verbindung zwischen einem die zu dosierende Flüssigkeit enthaltenen Vorratsbehälter und dem Tauchbehälter, insbesondere durch Betätigen eines in der fluidischen Verbindung angeordnetes Schwimmerventil, bei Unterschreiten des vorbestimmten Füllstands geöffnet und die fluidische Verbindung bei Erreichen des vorbestimmten Füllstands getrennt werden, wobei vorzugsweise die fluidische Verbindung zur Zuführung der zu dosierenden Flüssigkeit aus dem Vorratsbehälter in den Tauchbehälter vorgesehen ist.

Zusammenfassend betrifft die Erfindung eine Differenzialdosierwaage, bei der kombiniert die bekannte wägetechnische Entkopplung mittels Tauchrohr mit einer Vorrichtung, die eine geringe, konstante Eintauchtiefe in die Flüssigkeit sicherstellt, kombiniert werden. Somit werden die Nachteile eines Entkopplungselements (wie ein geringer Kraftnebenschluss, eine gute chemische-, thermische- und Druckbeständigkeit, eine elektrostatische Ableitfähigkeit, eine geringe Wärmeausdehnung und eine einfache, reproduzierbare Montierbarkeit) vermieden. Zudem werden erfindungsgemäß der Nachteil des Tauchrohrs, dass die durch das Tauchrohr verdrängte Flüssigkeitsmenge einen rechnerisch zu kompensierenden Wiegefehler erzeugt, der von der Mediendichte, der Rohrgeometrie und dem Behälterfüllstand abhängig ist, und der Nachteil des Tauchrohrs, dass die Länge des Tauchrohres wesentlich durch die Behälterhöhe bestimmt wird und mit größeren Behälterhöhen die erforderliche Ansaughöhe der Pumpe steigt, wodurch die Auswahl an dosierbaren Fördermedien/Flüssigkeiten und Pumpentypen eingeschränkt wird, vermieden. Dies wird dadurch erreicht, dass eine konstante Eintauchtiefe des Tauchrohr aufrechterhalten werden kann, indem beispielsweise der Füllstand in dem Tauchbehälter, unabhängig von der Menge der abgeführten Flüssigkeit, auf dem vorbestimmten Füllstand gehalten wird. Bevorzugt ist dabei ein Schwimmerventil vorgesehen, welches den Füllstand im Tauchbehälter konstant hält. Eine andere bevorzugte Lösung sieht einen Tauchbehälter vor, dessen Füllstand durch einen Überlauf konstant gehalten wird. Dabei ist es erforderlich, das übergelaufene Medium mittels einer Überlaufpumpe wieder auf ein höhergelegenes Niveau zu fördern, um es erneut dem Tauchbehälter zuführen zu können. Außerdem betrifft die Erfindung ein Verfahren zur Dosierung von Flüssigkeit.
Die Erfindung wird nachfolgend mit Hilfe von Zeichnungen erläutert. Es zeigen:
Fig. 1 eine schematische Darstellung einer ersten Ausführungsform einer erfindungsgemäßen Differenzialdosierwaage,
Fig. 2 eine schematische Darstellung einer zweiten Ausführungsform der erfindungsgemäßen Differenzialdosierwaage,
Fig. 3 eine schematische Darstellung der ersten Ausführungsform der Differenzialdosierwaage mit einer Regeleinrichtung,
Fig. 4 eine schematische Darstellung einer dritten Ausführungsform einer erfindungsgemäßen Differenzialdosierwaage, und
Fign. 5 bis 7 verschiedene schematische Darstellungen eines Tauchbehälters und eines Tauchrohrs der Differenzialdosierwaage zum Verständnis der Erfindung.

Die Figuren sind lediglich schematischer Natur und dienen ausschließlich dem Verständnis der Erfindung. Die gleichen Elemente sind mit denselben Bezugszeichen versehen. Merkmale unterschiedlicher Ausführungsformen können erfindungsgemäß miteinander kombiniert werden.

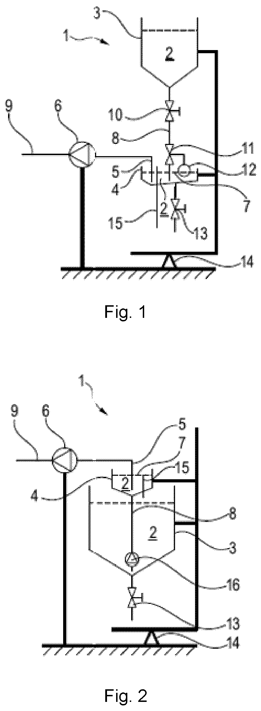

Fign. 1 bis 3 zeigen schematische Ansichten einer erfindungsgemäßen Differenzialdosierwaage 1. Die Differenzialdosierwaage 1 dient zur Dosierung von Flüssigkeit 2. Die Differenzialdosierwaage 1 weist einen Vorratsbehälter 3, in dem die zu dosierende Flüssigkeit 2 enthalten ist, und einen Tauchbehälter 4 auf, der mit dem Vorratsbehälter 3 zur Zuführung der zu dosierenden Flüssigkeit 2 aus dem Vorratsbehälter 3 in den Tauchbehälter 4 fluidisch verbunden ist und aus dem die zu dosierende Flüssigkeit 2 zur dosierten Entnahme der Flüssigkeit 2 abführbar ist. Zudem weist die Differenzialdosierwaage 1 ein Tauchrohr 5 auf, das zur dosierten Entnahme der zu dosierenden Flüssigkeit 2 aus dem Tauchbehälter 4 in den Tauchbehälter 4 eintaucht. Dabei taucht das Tauchrohr 5 so in den Tauchbehälter 4 ein, dass kein Kraftnebenschluss entsteht und das Tauchrohr nicht über den Tauchbehälter 4 abgestützt wird. Insbesondere ist das Tauchrohr 5 beabstandet zu einer Behälterwandung des Tauchbehälters 4 angeordnet. Ferner weist die Differenzialdosierwaage 1 eine Dosierpumpe 6 auf, mit der die zu dosierende Flüssigkeit 2 über das Tauchrohr 5 aus dem Tauchbehälter 4 ansaugbar und aus der Differenzialdosierwaage 1 (für einen nachfolgenden Prozess) abführbar ist.

Erfindungsgemäß ist die Differenzialdosierwaage 1 baulich und/oder regelungstechnisch so ausgebildet ist, dass ein in dem Tauchbehälter 4 vorliegender Flüssigkeitsspiegel der zu dosierenden Flüssigkeit 2 auf einem konstanten vorbestimmten Füllstand 7 gehalten wird (also insbesondere das Niveau des Flüssigkeitsspiegels relativ zu dem vorzugsweise ortsfesten Tauchrohr konstant gehalten wird).

In den dargestellten Ausführungsformen ist der Vorratsbehälter 3 über eine Verbindungsleitung/Fluidleitung 8 mit dem Tauchbehälter 4 verbunden, und das Tauchrohr 5 bzw. die Dosierpumpe 6 über eine Abführleitung 9 mit dem nachfolgenden Prozess verbunden. Der Vorratsbehälter 3, der Tauchbehälter 4 und die Verbindungsleitung 8 sind Teil eines verwogenen Systems, während das Tauchrohr 5, die Dosierpumpe 6 und die Abführleitung 9 nicht Teil des verwogenen Systems sind, sondern separat abgestützt sind. Zudem kann in der Verbindungsleitung 8 ein Wartungsventil 10 angeordnet sein, über das eine fluidische Verbindung zwischen dem Vorratsbehälter 3 und dem Tauchbehälter 4 zur Wartung sperrbar/trennbar ist.

In der ersten, in Fig. 1 dargestellten Ausführungsform wird das Konstant-Halten des vorbestimmten Füllstands 7 dadurch realisiert, dass in der Verbindungsleitung 8 ein Schwimmerventil 11 angeordnet ist und in dem Tauchbehälter 4 ein Schwimmkörper 12 angeordnet ist. Dabei ist das Schwimmerventil 11 so durch den Schwimmkörper 12 gesteuert, dass es die fluidische Verbindung bei Unterschreiten des vorbestimmten Füllstands 7 öffnet und die fluidische Verbindung bei Erreichen des vorbestimmten Füllstands 7 trennt.

**In** der in Fig. 1 dargestellten Ausführungsform ist der Tauchbehälter 4 in Schwerkraftrichtung unterhalb des Vorratsbehälters 3 angeordnet ist, so dass die zu dosierende Flüssigkeit 2 aus dem Vorratsbehälter 3 in den Tauchbehälter 4 schwerkraftbedingt zuführbar ist. Dabei kann die über das Schwimmerventil 11 in den Tauchbehälter 4 realisierbare, schwerkraftbedingte Förderleistung vorzugsweise höher als eine Förderleistung der Dosierpumpe 6 sein, um ausreichendes Nachfüllen gewährleisten zu können.

Zudem kann der Tauchbehälter 4 ein Entleerventil 13, durch dessen Öffnung die Flüssigkeit 2 zur vollständigen Entleerung des Tauchbehälters 4 abführbar ist, und/oder einen Überlauf 15 aufweisen, durch den die Flüssigkeit 2 aus dem Tauchbehälter 4 bei Überschreiten eines Überlauffüllstands ablaufen kann.

Zudem weist die Differenzialdosierwaage 1 eine Wägeeinrichtung 14 auf, die ausgelegt ist, um das Gewicht des verwogenen Systems, d.h. in Fig. 1 des Vorratsbehälters 3, des Tauchbehälters 4, der Verbindungsleitung 8, des Schwimmerventils 11, des Schwimmkörpers 12, des Entleerventils 13, des Überlaufs 15 und der in dem Vorratsbehälter 3, der Verbindungsleitung 8 und dem Tauchbehälter 4 enthaltenen Flüssigkeit 2 zu erfassen. Vorzugsweise kann daraus gravimetrisch die Menge der über die Dosierpumpe 6 abgeführten Flüssigkeit 2 ermittelt werden.

**In** der ersten, in Fig. 1 dargestellten Ausführungsform wird das Konstant-Halten des vorbestimmten Füllstands 7 dadurch realisiert, dass die Differenzialdosierwaage 1 den mit dem Tauchbehälter 4 fluidisch verbundenen Überlauf 15 aufweist, der so ausgebildet ist, dass die zu dosierende Flüssigkeit 2 bei Überschreiten des vorbestimmten Füllstands 7 über den Überlauf 15 aus dem Tauchbehälter 4 abläuft. Zudem ist die Differenzialdosierwaage 1 so ausgebildet, dass zu jedem Zeitpunkt zumindest so viel Flüssigkeit 2 in den Tauchbehälter 4 zugeführt wird, wie über den Überlauf 15 abläuft.

Zudem kann die Differenzialdosierwaage 1 vorzugsweise einen Überlaufbehälter, der in der in Fig. 2 dargestellten Ausführungsform durch den Vorratsbehälter 3 gebildet ist, mit dem der Überlauf 15 zum Auffangen der über den vorbestimmten Füllstand 7 ablaufenden Flüssigkeit 2 fluidisch verbunden ist. Dabei kann der Tauchbehälter 4 vorzugsweise in Schwerkraftrichtung oberhalb des Überlaufbehälters 3 angeordnet sein. Insbesondere kann die Differenzialdosierwaage 1 eine Überlaufpumpe 16 aufweisen, mit der die zu dosierende Flüssigkeit 2 aus dem Überlaufbehälter 16 ansaugbar und dem Tauchbehälter 4 zuführbar ist, wobei die Überlaufpumpe 16 eine höhere Förderleistung als die Dosierpumpe 6 aufweist. So kann sichergestellt werden, dass zu jedem Zeitpunkt zumindest so viel Flüssigkeit 2 in den Tauchbehälter 4 zuführbar ist, wie über den Überlauf 15 abläuft.

Alternativ oder zusätzlich kann die Differenzialdosierwaage 1, auch wenn es in den Figuren nicht dargestellt ist, ein in einer fluidischen Verbindung zwischen dem Vorratsbehälter 3 und dem Tauchbehälter 4 angeordnetes Steuerventil aufweisen, das so gesteuert und/oder geregelt ist, dass es eine Flüssigkeitsmenge aus dem Vorratsbehälter 3 in den Tauchbehälter 4 zuführt, die einer über das Tauchrohr 5 aus der Differenzialdosierwaage 1 abgeführten Flüssigkeitsmenge entspricht.

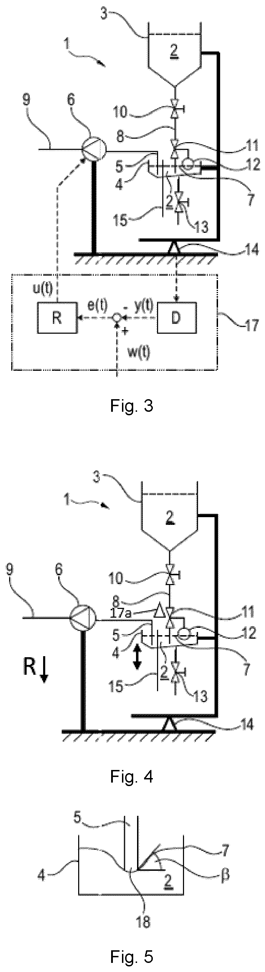

**In** Fig. 3 ist dargestellt, dass die Differenzialdosierwaage 1 eine Steuer- und/oder Regeleinrichtung 17 aufweist, die ausgelegt ist, um die Dosierpumpe 6 in Abhängigkeit des durch die Wägeeinrichtung 14 erfassten Gewichts des Systems und in Abhängigkeit einer Steuergröße für eine über das Tauchrohr 5 aus der Differenzialdosierwaage 1 abzuführende Menge der Flüssigkeit 2 zu steuern und/oder zu regeln. Somit kann eine gewünschte Dosiermenge an Flüssigkeit 2 dem nachfolgenden Prozess zugeführt werden.

**In** Fig. 4 ist eine Differenzialdosierwaage 1 in einer dritten Ausführungsform dargestellt. Dabei sind Merkmale, die gleich sind zu den Merkmalen der in Bezug auf Fig. 1 beschriebenen Differenzialdosierwaage mit gleichen Bezugszeichen versehen. Es werden daher nachfolgend nur die Unterschiede der Differenzialdosierwaage 1 zu der in Bezug auf Fig. 1 beschriebenen Differenzialdosierwaage beschrieben.

**In** der dritten, in Fig. 4 dargestellten Ausführungsform wird das Konstant-Halten des vorbestimmten Niveaus 7 des Flüssigkeitsspiegels dadurch realisiert, dass der Tauchbehälter 4 entlang eines geradlinigen Bewegungspfades parallel zur Schwerkraftrichtung R (die in Fig. 4 nach unten zeigt) verfahrbar ist, was in Fig. 4 durch einen Doppelpfeil angedeutet ist. Während des (netto) Abführens von Fluid aus dem Tauchbehälter 4 infolge des Dosiervorgangs wird der Tauchbehälter 4 dann antiparallel zur Schwerkraftrichtung R (in Fig. 4 also nach oben) verfahren.

Auf diese Weise kann der im Tauchbehälter 4 sinkende Flüssigkeitsspiegel relativ zu dem Tauchrohr auf konstantem Niveau gehalten werden. Mit anderen Worten, die Eintauchtiefe des Tauchrohrs 5 in die Flüssigkeit im Tauchbehälter 4 bleibt konstant, da der innerhalb des Tauchbehälters 4 absinkende Flüssigkeitsspiegel 7 durch ein gleichgroßes entgegengesetztes Verfahren des Tauchbehälters 4 nach oben kompensiert wird.

Dazu weist die Differenzialdosierwaage 1 eine Detektionseinrichtung 17a auf, mit der die Position des Flüssigkeitsspiegels in dem Tauchbehälter 4 relativ zu einer Referenz (etwa der Ansaugöffnung des Tauchrohres 5) detektiert wird. Die Detektionseinrichtung 17a ist vorliegend beispielsweise ein Ultraschallsensor. Dieser kann etwa durch Auswerten der Zweiwegelaufzeit eines ausgesendeten Ultraschallsignals bis zum Empfang des Echos die entsprechende Position des Flüssigkeitsspiegels 7 detektieren.

Damit ist die Differenzialdosierwaage 1 dazu ausgebildet, in Abhängigkeit einer Füllstandshöhe der Flüssigkeit in dem Tauchbehälter 4 den Tauchbehälter 4 zu verfahren.

Zeitweise wird bei dieser dritten Ausführungsform Flüssigkeit aus dem Vorratsbehälter 2 in den Tauchbehälter 4 verlagert. Dazu ist das Schwimmerventil 11 so durch den Schwimmkörper 12 gesteuert, dass es die fluidische Verbindung zwischen Vorratsbehälter 2 und Tauchbehälter 4 bei Unterschreiten einer unteren Füllstandsgrenze öffnet und die fluidische Verbindung bei Erreichen einer zweiten Füllstandsgrenze trennt.

Während die Flüssigkeit aus dem Vorratsbehälter 2 in den Tauchbehälter 4 verlagert wird, wird der Tauchbehälter 4 parallel zur Schwerkraftrichtung R (in Fig. 4 also nach unten) verfahren, sofern sich netto die Flüssigkeitsmenge in dem Tauchbehälter 4 erhöht, also mehr Flüssigkeit aus dem Vorratsbehälter 2 hinzukommt als über das Tauchrohr 5 aus dem Tauchbehälter 4 entnommen wird. Anderenfalls könnte beispielsweise lediglich die Verfahrgeschwindigkeit (antiparallel zur Schwerkraftrichtung R) angepasst, insbesondere reduziert, werden. Dadurch wird erreicht, dass auch während des Auffüllens des Tauchbehälters 4 die Eintauchtiefe des Tauchrohres 5 konstant bleibt.

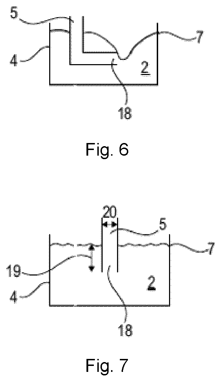

In Fign. 5 bis 7 ist, überspitzt dargestellt, zu erkennen, dass sich der Füllstand in dem Tauchbehälter 4, insbesondere bei einer große Entnahmemenge durch das Tauchrohr 5, auch nicht linear verändern kann und ein Böschungswinkel β ausgebildet werden kann. Um zu vermeiden, dass die Ausbildung eines solchen Böschungswinkels β sich auf die Auftriebskraft des Tauchrohrs 5 auswirkt, kann das Tauchrohr 5 wie in Fig. 6 dargestellt abgewinkelt ausgebildet sein. Dadurch ist eine Ansaugöffnung 18 des Tauchrohrs 5 zu einem Eintauchabschnitt des Tauchrohrs 5 beabstandet angeordnet, so dass sich selbst bei Ausbildung des Böschungswinkels β die Auftriebskraft des Tauchrohrs 5 nicht ändert, da der gleiche Teil des Tauchrohrs 5 von Flüssigkeit bedeckt bleibt. Durch die erfindungsgemäße Lösung (vgl. Fig. 7) wird jedoch der Füllstand auf dem vorbestimmten Füllstand 7 konstant gehalten, so dass eine gerade Ausbildung des Tauchrohrs 5 geeignet ist. Dabei sollte das Tauchrohr 5 eine Eintauchtiefe 19 aufweisen, die möglichst klein ist, bei der aber gleichzeitig verhindert wird, dass sich Turbulenzen an der Oberfläche der Flüssigkeit 2 auf das Ansaugverhalten an der Ansaugöffnung 18 auswirken. Somit hat es sich als vorteilhaft herausgestellt, wenn die Eintauchtiefe 19 des Tauchrohrs 5 dem 1- bis 10-fachen eines Tauchrohrdurchmessers 20 entspricht.

### Bezugszeichenliste

- 1: Differenzialdosierwaage
- 2: Flüssigkeit
- 3: Vorratsbehälter
- 4: Tauchbehälter
- 5: Tauchrohr
- 6: Dosierpumpe
- 7: vorbestimmter Füllstand
- 8: Verbindungsleitung
- 9: Abführleitung
- 10: Wartungsventil
- 11: Schwimmerventil
- 12: Schwimmerkörper
- 13: Entleerventil
- 14: Wägeeinrichtung
- 15: Überlauf
- 16: Überlaufpumpe
- 17: Regeleinrichtung
- 17a: Detektionseinrichtung
- 18: Ansaugöffnung
- 19: Eintauchtiefe
- 20: Tauchrohrdurchmesser
- R: Schwerkraftrichtung

## Patentansprüche

1. Differenzialdosierwaage (1) zur Dosierung von Flüssigkeit (2), mit einem Tauchbehälter (4), in dem die zu dosierende Flüssigkeit enthalten und/oder aufnehmbar ist und/oder aus dem die zu dosierende Flüssigkeit (2) zur dosierten Entnahme der Flüssigkeit (2) abführbar ist, einem Tauchrohr (5), das zur dosierten Entnahme der zu dosierenden Flüssigkeit (2) aus dem Tauchbehälter (4) in den Tauchbehälter (4) eintaucht, und einer Dosierpumpe (6), mit der die zu dosierende Flüssigkeit (2) über das Tauchrohr (5) aus dem Tauchbehälter (4) ansaugbar und aus der Differenzialdosierwaage (1) abführbar ist, **dadurch gekennzeichnet, dass** die Differenzialdosierwaage (1) baulich und/oder regelungstechnisch so ausgebildet ist, dass ein in dem Tauchbehälter (4) vorliegender Flüssigkeitsspiegel der zu dosierenden Flüssigkeit (2) auf einem konstanten vorbestimmten und/oder vorbestimmbaren Niveau relativ zu dem Tauchrohr (5) gehalten wird, indem die Differentialdosierwaage eine Detektionseinrichtung zum Detektieren einer Position des Flüssigkeitsspiegels und/oder zum Detektieren einer Füllstandshöhe der Flüssigkeit in dem Tauchbehälter (4) oder einen mit dem Tauchbehälter (4) fluidisch verbundenen Überlauf (15) aufweist.

2. Differenzialdosierwaage (1) nach Anspruch 1, wobei der in dem Tauchbehälter (4) vorliegende Flüssigkeitsspiegel der zu dosierenden Flüssigkeit (2) auf einem konstanten vorbestimmten und/oder vorbestimmbaren Niveau relativ zu einer Ansaugöffnung des Tauchrohrs (5) gehalten wird.

3. Differenzialdosierwaage (1) nach einem der vorangehenden Ansprüche, wobei der Tauchbehälter (4) entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar ist.

4. Differenzialdosierwaage (1) nach einem der vorangehenden Ansprüche, wobei das Tauchrohr (5) entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar ist.

5. Differenzialdosierwaage (1) nach Anspruch 4, wobei die Dosierpumpe (6) entlang zumindest eines, vorzugsweise entlang einer Richtung parallel zum Normalenvektor des Flüssigkeitsspiegels und/oder zur Schwerkraftrichtung verlaufenden, Bewegungspfades verfahrbar ist, und vorzugsweise die Differenzialdosierwaage (1) dazu ausgebildet ist, dass die Dosierpumpe (6) gleichsinnig und/oder gleichzeitig mit dem Tauchrohr (5) verfahren wird und/oder auf einem konstanten vorbestimmten und/oder vorbestimmbaren Niveau relativ zu dem Tauchrohr (5) und/oder dem Flüssigkeitsspiegel gehalten wird.

6. Differenzialdosierwaage (1) nach einem der vorangehenden Ansprüche, **dadurch gekennzeichnet, dass** die Detektionseinrichtung einen optischen Sensor, einen Ultraschallsensor und/oder einen Mikrowellensensor aufweist.

7. Differenzialdosierwaage (1) nach einem der vorangehenden Ansprüche, wobei die Differenzialdosierwaage (1) dazu ausgebildet ist, in Abhängigkeit einer Position des Flüssigkeitsspiegels und/oder einer Füllstandshöhe der Flüssigkeit in dem Tauchbehälter (4) den Tauchbehälter (4), das Tauchrohr (5) und/oder die Dosierpumpe (6) zu verfahren, wobei vorzugsweise die Position und/oder Füllstandshöhe mittels der Detektionseinrichtung ermittelt wird.

8. Differenzialdosierwaage (1) nach einem der vorangehenden Ansprüche, wobei die Differenzialdosierwaage (1) dazu ausgebildet ist, dass der Tauchbehälter (4) und/oder das Tauchrohr (5), insbesondere zum Halten des konstanten Niveaus des Flüssigkeitsspiegels relativ zu dem Tauchrohr (5), verfahren wird oder werden.

9. Differenzialdosierwaage (1) nach Anspruch 8, wobei die Differenzialdosierwaage (1) dazu ausgebildet ist, dass der Tauchbehälter (4) und das Tauchrohr (5), insbesondere zum Halten des konstanten Niveaus des Flüssigkeitsspiegels relativ zu dem Tauchrohr (5), beide, vorzugsweise zumindest zeitweise gleichzeitig und/oder in entgegengesetzten Richtungen, verfahren werden.

10. Differenzialdosierwaage (1) nach einem der vorangehenden Ansprüche, wobei zumindest der Tauchbehälter (4) zu einem verwogenen System der Differenzialdosierwaage (1) zählt.

11. Differenzialdosierwaage (1) nach einem der vorangehenden Ansprüche, wobei die Differenzialdosierwaage (1) dazu ausgebildet ist, die Geschwindigkeit und/oder die Richtung des Verfahrens des Tauchbehälters (4), des Tauchrohrs (5) und/oder der Dosierpumpe (6) jeweils in Abhängigkeit einer Änderung der Position des Flüssigkeitsspiegels und/oder der Füllstandshöhe der Flüssigkeit in dem Tauchbehälter (4) und/oder in Abhängigkeit einer Änderung der Ergebnisse von Wägungen des verwogenen Systems durchzuführen.

12. Differenzialdosierwaage (1) nach einem der vorangehenden Ansprüche, aufweisend einen Vorratsbehälter (3), in dem die zu dosierende Flüssigkeit (2) enthalten und/oder aufnehmbar ist, wobei der Tauchbehälter (4) mit dem Vorratsbehälter (3) zur Zuführung der zu dosierenden Flüssigkeit (2) aus dem Vorratsbehälter (3) in den Tauchbehälter (4) fluidisch verbunden ist.

13. Differenzialdosierwaage (1) nach Anspruch 12, wobei der Vorratsbehälter (3) zu dem verwogenen System der Differenzialdosierwaage (1) zählt.

14. Differenzialdosierwaage (1) nach einem der vorangehenden Ansprüche, wobei die Differenzialdosierwaage (1) baulich und/oder regelungstechnisch so ausgebildet ist, dass ein in dem Tauchbehälter (4) vorliegender Flüssigkeitsspiegel der zu dosierenden Flüssigkeit (2), insbesondere während des Betriebs der Differenzialdosierwaage und/oder während des Dosierens der Flüssigkeit, auf einem konstanten vorbestimmten und/oder vorbestimmbaren Füllstand (7) gehalten wird.

15. Differenzialdosierwaage (1) nach einem der vorangehenden Ansprüchen, **dadurch gekennzeichnet, dass** die Differenzialdosierwaage (1) ein in einer fluidischen Verbindung zwischen dem Vorratsbehälter (3) und dem Tauchbehälter (4) angeordnetes Schwimmerventil (11) und einen in dem Tauchbehälter (4) angeordneten Schwimmkörper (12) aufweist, wobei das Schwimmerventil (11) so durch den Schwimmkörper (12) gesteuert ist, dass es die fluidische Verbindung bei Unterschreiten des vorbestimmten Füllstands (7) öffnet und die fluidische Verbindung bei Erreichen des vorbestimmten Füllstands (7) trennt.

16. Differenzialdosierwaage (1) nach einem den vorangehenden Ansprüchen, **dadurch gekennzeichnet, dass** der Tauchbehälter (4) in Schwerkraftrichtung unterhalb des Vorratsbehälters (3) angeordnet ist, so dass die zu dosierende Flüssigkeit (2) aus dem Vorratsbehälter (3) in den Tauchbehälter (4) schwerkraftbedingt zuführbar ist.

17. Differenzialdosierwaage (1) nach Anspruch 16, **dadurch gekennzeichnet, dass** die über das Schwimmerventil (11) in den Tauchbehälter (4) bestimmte fluidische Verbindung eine schwerkraftbedingte Förderleistung aufweist, die höher als eine Förderleistung der Dosierpumpe (6) ist.

18. Differenzialdosierwaage (1) nach einem der vorangehenden Ansprüche, wobei das von dem Tauchbehälter (4) aufnehmbare Volumen anpassbar ist, insbesondere indem ein Bodenbereich und/oder ein Wandbereich des Tauchbehälters (4) zumindest bereichsweise beweglich und/oder in seiner Form veränderbar ausgebildet ist.

19. Differenzialdosierwaage (1) nach einem der vorangehenden Ansprüche, wobei die Differenzialdosierwaage (1) dazu ausgebildet ist, in Abhängigkeit einer Position des Flüssigkeitsspiegels und/oder einer Füllstandshöhe der Flüssigkeit in dem Tauchbehälter (4) das von dem Tauchbehälter (4) aufnehmbare Volumen anzupassen.

20. Differenzialdosierwaage (1) nach einem der vorangehenden Ansprüche, **dadurch gekennzeichnet, dass** der mit dem Tauchbehälter fluidisch verbundene Überlauf (15) so ausgebildet ist, dass die zu dosierende Flüssigkeit (2) bei Überschreiten des vorbestimmten Füllstands (7) über den Überlauf (15) aus dem Tauchbehälter (4) abläuft.

21. Differenzialdosierwaage (1) nach Anspruch 20, **dadurch gekennzeichnet, dass** die Differenzialdosierwaage (1) einen Überlaufbehälter (3) aufweist, mit dem der Überlauf (15) zum Auffangen der über den vorbestimmten Füllstand (7) ablaufenden Flüssigkeit (2) fluidisch verbunden ist, wobei der Tauchbehälter (4) in Schwerkraftrichtung oberhalb des Überlaufbehälters (3) angeordnet ist.

22. Differenzialdosierwaage (1) nach Anspruch 21, **dadurch gekennzeichnet, dass** die Differenzialdosierwaage (1) eine Überlaufpumpe (16) aufweist, mit der die zu dosierende Flüssigkeit (2) aus dem Überlaufbehälter (16) ansaugbar und dem Tauchbehälter (4) zuführbar ist, wobei die Überlaufpumpe (16) eine höhere Förderleistung als die Dosierpumpe (6) aufweist.

23. Differenzialdosierwaage (1) nach einem der vorangehenden Ansprüche, **dadurch gekennzeichnet, dass** die Differenzialdosierwaage (1) ein in einer fluidischen Verbindung zwischen dem Vorratsbehälter (3) und dem Tauchbehälter (4) angeordnetes Steuerventil aufweist, das so gesteuert und/oder geregelt ist, dass es eine Flüssigkeitsmenge aus dem Vorratsbehälter (3) in den Tauchbehälter (4) zuführt, die einer über das Tauchrohr (5) aus der Differenzialdosierwaage (1) abgeführten Flüssigkeitsmenge entspricht.

24. Differenzialdosierwaage (1) nach einem der vorangehenden Ansprüche, **dadurch gekennzeichnet, dass** das Tauchrohr (5) eine Ansaugöffnung (18) zum Ansaugen der zu dosierenden Flüssigkeit (2) aus dem Tauchbehälter (4) aufweist, die so angeordnet ist, dass sie mit einer Eintauchtiefe (19) unterhalb des vorbestimmten Füllstands (7) in die Flüssigkeit (2) eintaucht, die zwischen dem 1- bis 10-fachen eines Tauchrohrdurchmessers (20) liegt.

25. Differenzialdosierwaage (1) nach einem der vorangehenden Ansprüche, **dadurch gekennzeichnet, dass** die Differenzialdosierwaage (1) eine Wägeeinrichtung (14) aufweist, die ausgelegt ist, um das Gewicht eines und/oder des verwogenen Systems, insbesondere aus dem Vorratsbehälter (3), dem Tauchbehälter (4) und der darin enthaltenen, zu dosierenden Flüssigkeit (2), zu erfassen, wobei die Differenzialdosierwaage (1) eine Steuer- und/oder Regeleinrichtung (17) aufweist, die ausgelegt ist, um die Dosierpumpe (6) in Abhängigkeit des durch die Wägeeinrichtung (14) erfassten Gewichts des Systems und in Abhängigkeit einer Steuergröße für eine über das Tauchrohr (5) aus der Differenzialdosierwaage (1) abzuführende Menge der Flüssigkeit (2) zu steuern und/oder zu regeln.

26. Verfahren zur Dosierung von Flüssigkeit, das Verfahren aufweisend, dass die zu dosierende Flüssigkeit in einem Tauchbehälter einer Differenzialdosierwaage bereitgestellt wird, aus welchem Tauchbehälter die zu dosierende Flüssigkeit zur dosierten Entnahme der Flüssigkeit mit einer Dosierpumpe über ein zur dosierten Entnahme der zu dosierenden Flüssigkeit aus dem Tauchbehälter in den Tauchbehälter eintauchendes Tauchrohr angesaugt und aus der Differenzialdosierwaage abgeführt wird, wobei ein Flüssigkeitsspiegel der zu dosierenden Flüssigkeit in dem Tauchbehälter, insbesondere während des Betriebs der Differenzialdosierwaage und/oder während des Dosierens der Flüssigkeit, auf einem konstanten vorbestimmten und/oder vorbestimmbaren Niveau relativ zu dem Tauchrohr, insbesondere einer Ansaugöffnung des Tauchrohrs, gehalten wird, wobei die Differentialdosierwaage eine Detektionseinrichtung zum Detektieren einer Position des Flüssigkeitsspiegels und/oder zum Detektieren einer Füllstandshöhe der Flüssigkeit in dem Tauchbehälter (4) oder einen mit dem Tauchbehälter (4) fluidisch verbundenen Überlauf (15) aufweist.

27. Verfahren nach Anspruch 26, wobei der Tauchbehälter und/oder das Tauchrohr, insbesondere zum Halten des konstanten Niveaus des Flüssigkeitsspiegels relativ zu dem Tauchrohr, verfahren wird oder werden.

28. Verfahren nach einem der Ansprüche 26 oder 27, wobei ein in dem Tauchbehälter vorliegender Flüssigkeitsspiegel der zu dosierenden Flüssigkeit, insbesondere während des Betriebs der Differenzialdosierwaage und/oder während des Dosierens der Flüssigkeit, auf einem konstanten vorbestimmten und/oder vorbestimmbaren Füllstand gehalten wird.

29. Verfahren nach einem der Ansprüche 26 bis 28, wobei eine fluidische Verbindung zwischen einem die zu dosierende Flüssigkeit enthaltenen Vorratsbehälter und dem Tauchbehälter, insbesondere durch Betätigen eines in der fluidischen Verbindung angeordnetes Schwimmerventil, bei Unterschreiten des vorbestimmten Füllstands geöffnet und die fluidische Verbindung bei Erreichen des vorbestimmten Füllstands getrennt wird, wobei vorzugsweise die fluidische Verbindung zur Zuführung der zu dosierenden Flüssigkeit aus dem Vorratsbehälter in den Tauchbehälter vorgesehen ist.

## Claims

1. Differential dosing scale (1) for dosing of liquid (2), comprising an immersion vessel (4), in which the liquid to be dosed is contained and/or receivable and/or from which the liquid (2) to be dosed is dischargeable for metered withdrawal of the liquid (2), an immersion tube (5), which for metered withdrawal of the liquid (2) to be dosed from the immersion vessel (4) immerses into the immersion vessel (4), and a dosing pump (6), with which the liquid (2) to be dosed is suckable in via the immersion tube (5) from the immersion vessel (4) and dischargeable from the differential dosing scale (1), **characterized in that** the differential dosing scale (1) is configured structurally and/or in terms of control technology such that a liquid level present in the immersion vessel (4) of the liquid (2) to be dosed is maintained at a constant predetermined and/or predeterminable level relative to the immersion tube (5), by the differential dosing scale comprising a detection device for detecting a position of the liquid level and/or for detecting a fill height of the liquid in the immersion vessel (4) or an overflow (15) fluidically connected with the immersion vessel (4).

2. Differential dosing scale (1) according to claim 1, wherein the liquid level present in the immersion vessel (4) of the liquid (2) to be dosed is maintained at a constant predetermined and/or predeterminable level relative to a suction opening of the immersion tube (5).

3. Differential dosing scale (1) according to any of the preceding claims, wherein the immersion vessel (4) is movable along at least one, preferably along a direction extending parallel to the normal vector of the liquid level and/or to the direction of gravity, movement path.

4. Differential dosing scale (1) according to any of the preceding claims, wherein the immersion tube (5) is movable along at least one, preferably along a direction extending parallel to the normal vector of the liquid level and/or to the direction of gravity, movement path.

5. Differential dosing scale (1) according to claim 4, wherein the dosing pump (6) is movable along at least one, preferably along a direction parallel to the normal vector of the liquid level and/or to the direction of gravity, movement path, and preferably the differential dosing scale (1) is configured such that the dosing pump (6) is moved in the same direction and/or simultaneously with the immersion tube (5) and/or is maintained at a constant predetermined and/or predeterminable level relative to the immersion tube (5) and/or the liquid level.

6. Differential dosing scale (1) according to any of the preceding claims, **characterized in that** the detection device comprises an optical sensor, an ultrasonic sensor and/or a microwave sensor.

7. Differential dosing scale (1) according to any of the preceding claims, wherein the differential dosing scale (1) is configured to, depending on a position of the liquid level and/or a fill height of the liquid in the immersion vessel (4), move the immersion vessel (4), the immersion tube (5) and/or the dosing pump (6), wherein preferably the position and/or fill height is determined by means of the detection device.

8. Differential dosing scale (1) according to any of the preceding claims, wherein the differential dosing scale (1) is configured such that the immersion vessel (4) and/or the immersion tube (5), in particular for maintaining the constant level of the liquid level relative to the immersion tube (5), is or are moved.

9. Differential dosing scale (1) according to claim 8, wherein the differential dosing scale (1) is configured such that the immersion vessel (4) and the immersion tube (5), in particular for maintaining the constant level of the liquid level relative to the immersion tube (5), both, preferably at least temporarily simultaneously and/or in opposite directions, are moved.

10. Differential dosing scale (1) according to any of the preceding claims, wherein at least the immersion vessel (4) is counted as part of a weighed system of the differential dosing scale (1).

11. Differential dosing scale (1) according to any of the preceding claims, wherein the differential dosing scale (1) is configured to carry out the speed and/or the direction of movement of the immersion vessel (4), the immersion tube (5) and/or the dosing pump (6) in each case depending on a change of the position of the liquid level and/or the fill height of the liquid in the immersion vessel (4) and/or depending on a change of the results of weighings of the weighed system.

12. Differential dosing scale (1) according to any of the preceding claims, comprising a supply vessel (3), in which the liquid (2) to be dosed is contained and/or receivable, wherein the immersion vessel (4) is fluidically connected with the supply vessel (3) for supplying the liquid (2) to be dosed from the supply vessel (3) into the immersion vessel (4).

13. Differential dosing scale (1) according to claim 12, wherein the supply vessel (3) is counted as part of the weighed system of the differential dosing scale (1).

14. Differential dosing scale (1) according to any of the preceding claims, wherein the differential dosing scale (1) is configured structurally and/or in terms of control technology such that a liquid level present in the immersion vessel (4) of the liquid (2) to be dosed, in particular during operation of the differential dosing scale and/or during dosing of the liquid, is maintained at a constant predetermined and/or predeterminable fill level (7).

15. Differential dosing scale (1) according to any of the preceding claims, **characterized in that** the differential dosing scale (1) comprises a float valve (11) arranged in a fluidic connection between the supply vessel (3) and the immersion vessel (4) and a float body (12) arranged in the immersion vessel (4), wherein the float valve (11) is controlled by the float body (12) such that it opens the fluidic connection when the predetermined fill level (7) is undershot and disconnects the fluidic connection when the predetermined fill level (7) is reached.

16. Differential dosing scale (1) according to any of the preceding claims, **characterized in that** the immersion vessel (4) is arranged in the direction of gravity below the supply vessel (3), so that the liquid (2) to be dosed is supplyable from the supply vessel (3) into the immersion vessel (4) by gravity.

17. Differential dosing scale (1) according to claim 16, **characterized in that** the fluidic connection determined via the float valve (11) into the immersion vessel (4) has a gravity-induced delivery rate, which is higher than a delivery rate of the dosing pump (6).

18. Differential dosing scale (1) according to any of the preceding claims, wherein the volume receivable by the immersion vessel (4) is adjustable, in particular in that a bottom region and/or a wall region of the immersion vessel (4) is at least partially movable and/or configured to be shape changeable.

19. Differential dosing scale (1) according to any of the preceding claims, wherein the differential dosing scale (1) is configured to, depending on a position of the liquid level and/or a fill height of the liquid in the immersion vessel (4), adjust the volume receivable by the immersion vessel (4).

20. Differential dosing scale (1) according to any of the preceding claims, **characterized in that** the overflow (15) fluidically connected with the immersion vessel is configured such that the liquid (2) to be dosed, when the predetermined fill level (7) is exceeded, flows out of the immersion vessel (4) via the overflow (15).

21. Differential dosing scale (1) according to claim 20, **characterized in that** the differential dosing scale (1) comprises an overflow vessel (3), with which the overflow (15) is fluidically connected for collecting the liquid (2) flowing out above the predetermined fill level (7), wherein the immersion vessel (4) is arranged in the direction of gravity above the overflow vessel (3).

22. Differential dosing scale (1) according to claim 21, **characterized in that** the differential dosing scale (1) comprises an overflow pump (16), with which the liquid (2) to be dosed is suckable in from the overflow vessel (16) and is supplyable to the immersion vessel (4), wherein the overflow pump (16) has a higher delivery rate than the dosing pump (6).

23. Differential dosing scale (1) according to any of the preceding claims, **characterized in that** the differential dosing scale (1) comprises a control valve arranged in a fluidic connection between the supply vessel (3) and the immersion vessel (4), which is controlled and/or regulated such that it supplies an amount of liquid from the supply vessel (3) into the immersion vessel (4), which corresponds to an amount of liquid discharged via the immersion tube (5) from the differential dosing scale (1).

24. Differential dosing scale (1) according to any of the preceding claims, **characterized in that** the immersion tube (5) comprises a suction opening (18) for sucking in the liquid (2) to be dosed from the immersion vessel (4), which is arranged such that it immerses with an immersion depth (19) below the predetermined fill level (7) into the liquid (2), which lies between 1 and 10 times an immersion tube diameter (20).

25. Differential dosing scale (1) according to any of the preceding claims, **characterized in that** the differential dosing scale (1) comprises a weighing device (14), which is designed to detect the weight of a and/or the weighed system, in particular from the supply vessel (3), the immersion vessel (4) and the liquid (2) to be dosed contained therein, wherein the differential dosing scale (1) comprises a control and/or regulation device (17), which is designed to control and/or regulate the dosing pump (6) depending on the weight of the system detected by the weighing device (14) and depending on a control variable for an amount to be discharged via the immersion tube (5) from the differential dosing scale (1) of the liquid (2).

26. Method for dosing of liquid, the method comprising that the liquid to be dosed is provided in an immersion vessel of a differential dosing scale, from which immersion vessel the liquid to be dosed for metered withdrawal of the liquid is sucked in with a dosing pump via an immersion tube immersing into the immersion vessel for metered withdrawal of the liquid to be dosed and is discharged from the differential dosing scale, wherein a liquid level of the liquid to be dosed in the immersion vessel, in particular during operation of the differential dosing scale and/or during dosing of the liquid, is maintained at a constant predetermined and/or predeterminable level relative to the immersion tube, in particular a suction opening of the immersion tube, wherein the differential dosing scale comprises a detection device for detecting a position of the liquid level and/or for detecting a fill height of the liquid in the immersion vessel (4) or an overflow (15) fluidically connected with the immersion vessel (4).

27. Method according to claim 26, wherein the immersion vessel and/or the immersion tube, in particular for maintaining the constant level of the liquid level relative to the immersion tube, is or are moved.

28. Method according to any of claims 26 or 27, wherein a liquid level present in the immersion vessel of the liquid to be dosed, in particular during operation of the differential dosing scale and/or during dosing of the liquid, is maintained at a constant predetermined and/or predeterminable fill level.

29. Method according to any of claims 26 to 28, wherein a fluidic connection between a supply vessel containing the liquid to be dosed and the immersion vessel, in particular by actuating a float valve arranged in the fluidic connection, is opened when the predetermined fill level is undershot and the fluidic connection is disconnected when the predetermined fill level is reached, wherein preferably the fluidic connection is provided for supplying the liquid to be dosed from the supply vessel into the immersion vessel.

## Revendications

1. Balance de dosage différentielle (1) pour le dosage de liquide (2), comportant un récipient d'immersion (4), dans lequel le liquide à doser est contenu et/ou pouvant être reçu et/ou à partir duquel le liquide (2) à doser peut être évacué pour le prélèvement dosé du liquide (2), un tube plongeur (5), qui pour le prélèvement dosé du liquide (2) à doser s'immerge dans le récipient d'immersion (4), et une pompe de dosage (6), avec laquelle le liquide (2) à doser peut être aspiré via le tube plongeur (5) à partir du récipient d'immersion (4) et évacué de la balance de dosage différentielle (1), **caractérisée en ce que** la balance de dosage différentielle (1) est conçue sur le plan structurel et/ou de régulation de telle sorte qu'un niveau de liquide présent dans le récipient d'immersion (4) du liquide (2) à doser est maintenu à un niveau constant prédéterminé et/ou prédéterminable par rapport au tube plongeur (5), **en ce que** la balance de dosage différentielle comporte un dispositif de détection pour détecter une position du niveau de liquide et/ou pour détecter une hauteur de niveau de liquide du liquide dans le récipient d'immersion (4) ou un trop-plein (15) relié fluidiquement au récipient d'immersion (4).

2. Balance de dosage différentielle (1) selon la revendication 1, dans laquelle le niveau de liquide présent dans le récipient d'immersion (4) du liquide (2) à doser est maintenu à un niveau constant prédéterminé et/ou prédéterminable par rapport à une orifice d'aspiration du tube plongeur (5).

3. Balance de dosage différentielle (1) selon l'une des revendications précédentes, dans laquelle le récipient d'immersion (4) est déplaçable le long d'au moins une, de préférence le long d'une direction parallèle au vecteur normal du niveau de liquide et/ou à la direction de la gravité, trajectoire de mouvement s'étendant.

4. Balance de dosage différentielle (1) selon l'une des revendications précédentes, dans laquelle le tube plongeur (5) est déplaçable le long d'au moins une, de préférence le long d'une direction parallèle au vecteur normal du niveau de liquide et/ou à la direction de la gravité, trajectoire de mouvement s'étendant.

5. Balance de dosage différentielle (1) selon la revendication 4, dans laquelle la pompe de dosage (6) est déplaçable le long d'au moins une, de préférence le long d'une direction parallèle au vecteur normal du niveau de liquide et/ou à la direction de la gravité, trajectoire de mouvement s'étendant, et de préférence la balance de dosage différentielle (1) est conçue de sorte que la pompe de dosage (6) soit déplacée dans le même sens et/ou simultanément avec le tube plongeur (5) et/ou maintenue à un niveau constant prédéterminé et/ou prédéterminable par rapport au tube plongeur (5) et/ou au niveau de liquide.

6. Balance de dosage différentielle (1) selon l'une des revendications précédentes, **caractérisée en ce que** le dispositif de détection comporte un capteur optique, un capteur à ultrasons et/ou un capteur à micro-ondes.

7. Balance de dosage différentielle (1) selon l'une des revendications précédentes, dans laquelle la balance de dosage différentielle (1) est conçue pour déplacer, en fonction d'une position du niveau de liquide et/ou d'une hauteur de niveau de liquide du liquide dans le récipient d'immersion (4), le récipient d'immersion (4), le tube plongeur (5) et/ou la pompe de dosage (6), la position et/ou la hauteur de niveau de liquide étant de préférence déterminée au moyen du dispositif de détection.

8. Balance de dosage différentielle (1) selon l'une des revendications précédentes, dans laquelle la balance de dosage différentielle (1) est conçue de sorte que le récipient d'immersion (4) et/ou le tube plongeur (5), en particulier pour maintenir le niveau constant du niveau de liquide par rapport au tube plongeur (5), soit déplacé ou soient déplacés.

9. Balance de dosage différentielle (1) selon la revendication 8, dans laquelle la balance de dosage différentielle (1) est conçue de sorte que le récipient d'immersion (4) et le tube plongeur (5), en particulier pour maintenir le niveau constant du niveau de liquide par rapport au tube plongeur (5), tous deux, de préférence au moins temporairement simultanément et/ou dans des directions opposées, soient déplacés.

10. Balance de dosage différentielle (1) selon l'une des revendications précédentes, dans laquelle au moins le récipient d'immersion (4) fait partie d'un système pesé de la balance de dosage différentielle (1).

11. Balance de dosage différentielle (1) selon l'une des revendications précédentes, dans laquelle la balance de dosage différentielle (1) est conçue pour effectuer la vitesse et/ou la direction du déplacement du récipient d'immersion (4), du tube plongeur (5) et/ou de la pompe de dosage (6) respectivement en fonction d'un changement de la position du niveau de liquide et/ou de la hauteur de niveau de liquide du liquide dans le récipient d'immersion (4) et/ou en fonction d'un changement des résultats de mesures de poids du système pesé.

12. Balance de dosage différentielle (1) selon l'une des revendications précédentes, comportant un réservoir de stockage (3), dans lequel le liquide (2) à doser est contenu et/ou pouvant être reçu, le récipient d'immersion (4) étant relié fluidiquement au réservoir de stockage (3) pour l'alimentation du liquide (2) à doser du réservoir de stockage (3) vers le récipient d'immersion (4).

13. Balance de dosage différentielle (1) selon la revendication 12, dans laquelle le réservoir de stockage (3) fait partie du système pesé de la balance de dosage différentielle (1).

14. Balance de dosage différentielle (1) selon l'une des revendications précédentes, dans laquelle la balance de dosage différentielle (1) est conçue sur le plan structurel et/ou de régulation de telle sorte qu'un niveau de liquide présent dans le récipient d'immersion (4) du liquide (2) à doser, en particulier pendant le fonctionnement de la balance de dosage différentielle et/ou pendant le dosage du liquide, est maintenu à un niveau de remplissage (7) constant prédéterminé et/ou prédéterminable.

15. Balance de dosage différentielle (1) selon l'une des revendications précédentes, **caractérisée en ce que** la balance de dosage différentielle (1) comporte une soupape à flotteur (11) disposée dans une connexion fluidique entre le réservoir de stockage (3) et le récipient d'immersion (4) et un flotteur (12) disposé dans le récipient d'immersion (4), la soupape à flotteur (11) étant commandée par le flotteur (12) de telle sorte qu'elle ouvre la connexion fluidique lors du passage en dessous du niveau de remplissage (7) prédéterminé et coupe la connexion fluidique lors de l'atteinte du niveau de remplissage (7) prédéterminé.

16. Balance de dosage différentielle (1) selon l'une des revendications précédentes, **caractérisée en ce que** le récipient d'immersion (4) est disposé en direction de la gravité en dessous du réservoir de stockage (3), de sorte que le liquide (2) à doser peut être alimenté du réservoir de stockage (3) vers le récipient d'immersion (4) par gravité.

17. Balance de dosage différentielle (1) selon la revendication 16, **caractérisée en ce que** la connexion fluidique déterminée par la soupape à flotteur (11) dans le récipient d'immersion (4) présente une capacité de pompage due à la gravité, qui est supérieure à une capacité de pompage de la pompe de dosage (6).

18. Balance de dosage différentielle (1) selon l'une des revendications précédentes, dans laquelle le volume pouvant être reçu par le récipient d'immersion (4) est adaptable, en particulier en ce qu'une zone de fond et/ou une zone de paroi du récipient d'immersion (4) est au moins par endroits mobile et/ou conçue de manière à pouvoir être modifiée dans sa forme.

19. Balance de dosage différentielle (1) selon l'une des revendications précédentes, dans laquelle la balance de dosage différentielle (1) est conçue pour adapter le volume pouvant être reçu par le récipient d'immersion (4) en fonction d'une position du niveau de liquide et/ou d'une hauteur de niveau de liquide du liquide dans le récipient d'immersion (4).

20. Balance de dosage différentielle (1) selon l'une des revendications précédentes, **caractérisée en ce que** le trop-plein (15) relié fluidiquement au récipient d'immersion est conçu de telle sorte que le liquide (2) à doser, lors du dépassement du niveau de remplissage (7) prédéterminé, s'écoule du récipient d'immersion (4) via le trop-plein (15).

21. Balance de dosage différentielle (1) selon la revendication 20, **caractérisée en ce que** la balance de dosage différentielle (1) comporte un réservoir de trop-plein (3), auquel le trop-plein (15) est relié fluidiquement pour recueillir le liquide (2) s'écoulant au-delà du niveau de remplissage (7) prédéterminé, le récipient d'immersion (4) étant disposé en direction de la gravité au-dessus du réservoir de trop-plein (3).

22. Balance de dosage différentielle (1) selon la revendication 21, **caractérisée en ce que** la balance de dosage différentielle (1) comporte une pompe de trop-plein (16), avec laquelle le liquide (2) à doser peut être aspiré du réservoir de trop-plein (16) et alimenté au récipient d'immersion (4), la pompe de trop-plein (16) présentant une capacité de pompage supérieure à celle de la pompe de dosage (6).

23. Balance de dosage différentielle (1) selon l'une des revendications précédentes, **caractérisée en ce que** la balance de dosage différentielle (1) comporte une soupape de commande disposée dans une connexion fluidique entre le réservoir de stockage (3) et le récipient d'immersion (4), qui est commandée et/ou régulée de telle sorte qu'elle alimente une quantité de liquide du réservoir de stockage (3) dans le récipient d'immersion (4) qui correspond à une quantité de liquide évacuée via le tube plongeur (5) de la balance de dosage différentielle (1).

24. Balance de dosage différentielle (1) selon l'une des revendications précédentes, **caractérisée en ce que** le tube plongeur (5) comporte une orifice d'aspiration (18) pour aspirer le liquide (2) à doser à partir du récipient d'immersion (4), qui est disposée de telle sorte qu'elle s'immerge dans le liquide (2) avec une profondeur d'immersion (19) en dessous du niveau de remplissage (7) prédéterminé, laquelle se situe entre 1 et 10 fois un diamètre de tube plongeur (20).

25. Balance de dosage différentielle (1) selon l'une des revendications précédentes, **caractérisée en ce que** la balance de dosage différentielle (1) comporte un dispositif de pesée (14) conçu pour mesurer le poids d'un et/ou du système pesé, en particulier du réservoir de stockage (3), du récipient d'immersion (4) et du liquide (2) à doser contenu dans celui-ci, la balance de dosage différentielle (1) comportant un dispositif de commande et/ou de régulation (17) conçu pour commander et/ou réguler la pompe de dosage (6) en fonction du poids du système mesuré par le dispositif de pesée (14) et en fonction d'une variable de commande pour une quantité de liquide (2) à évacuer via le tube plongeur (5) de la balance de dosage différentielle (1).

26. Procédé de dosage de liquide, le procédé comportant que le liquide à doser est fourni dans un récipient d'immersion d'une balance de dosage différentielle, à partir duquel récipient d'immersion le liquide à doser est évacué pour le prélèvement dosé du liquide avec une pompe de dosage via un tube plongeur s'immergeant dans le récipient d'immersion pour le prélèvement dosé du liquide à doser, aspiré et évacué de la balance de dosage différentielle, un niveau de liquide du liquide à doser dans le récipient d'immersion, en particulier pendant le fonctionnement de la balance de dosage différentielle et/ou pendant le dosage du liquide, étant maintenu à un niveau constant prédéterminé et/ou prédéterminable par rapport au tube plongeur, en particulier à une orifice d'aspiration du tube plongeur, la balance de dosage différentielle comportant un dispositif de détection pour détecter une position du niveau de liquide et/ou pour détecter une hauteur de niveau de liquide du liquide dans le récipient d'immersion (4) ou un trop-plein (15) relié fluidiquement au récipient d'immersion (4).

27. Procédé selon la revendication 26, dans lequel le récipient d'immersion et/ou le tube plongeur, en particulier pour maintenir le niveau constant du niveau de liquide par rapport au tube plongeur, est ou sont déplacés.

28. Procédé selon l'une des revendications 26 ou 27, dans lequel un niveau de liquide présent dans le récipient d'immersion du liquide à doser, en particulier pendant le fonctionnement de la balance de dosage différentielle et/ou pendant le dosage du liquide, est maintenu à un niveau de remplissage constant prédéterminé et/ou prédéterminable.

29. Procédé selon l'une des revendications 26 à 28, dans lequel une connexion fluidique entre un réservoir de stockage contenant le liquide à doser et le récipient d'immersion, en particulier par actionnement d'une soupape à flotteur disposée dans la connexion fluidique, est ouverte lors du passage en dessous du niveau de remplissage prédéterminé et la connexion fluidique est coupée lors de l'atteinte du niveau de remplissage prédéterminé, la connexion fluidique étant de préférence prévue pour l'alimentation du liquide à doser du réservoir de stockage vers le récipient d'immersion.
